(19) **Europäisches Patentamt / European Patent Office / Office européen des brevets**

(11) **EP 1 858 001 B1**

(12) **EUROPEAN PATENT SPECIFICATION**

(45) Date of publication and mention
of the grant of the patent:
**01.04.2009 Bulletin 2009/14**

(51) Int Cl.:
**_G09G 3/34_** _(2006.01)_

(21) Application number: **07251847.5**

(22) Date of filing: **02.05.2007**

(54) **Image display apparatus and image display method**

Bildanzeigevorrichtung und Bildanzeigeverfahren

Appareil d'affichage d'images et procédé d'affichage d'images

(84) Designated Contracting States:
**DE FR GB**

(30) Priority: **19.05.2006 JP 2006140612**

(43) Date of publication of application:
**21.11.2007 Bulletin 2007/47**

(73) Proprietor: **KABUSHIKI KAISHA TOSHIBA**
**Tokyo (JP)**

(72) Inventors:
• **Baba, Masahiro**
**Tokyo (JP)**

• **Itoh, Goh**
**Tokyo (JP)**

(74) Representative: **Jenkins, Peter David et al**
**Page White & Farrer**
**Bedford House**
**John Street**
**London WC1N 2BF (GB)**

(56) References cited:
**WO-A-02/03687          WO-A-20/05093703**

**Description**

BACKGROUND OF THE INVENTION

Field of the Invention

The present invention relates to an image display apparatus and an image display method capable of enhancing a visual contrast of a display image.

Related Art

In recent years, image display apparatuses becomes widely used, represented by a liquid crystal display, including a light source and a light modulation device for modulating light intensity from the light source. As for such image display apparatuses, however, the light modulation device does not have an ideal modulation characteristic so that contrast is reduced due to leakage of light from the light modulation device especially when displaying black.
To suppress the reduction in contrast, there are multiple proposed methods of performing a correction of an input image and intensity modulation of the light source in combination according to the input image. For instance, according to Japanese Patent No. 3215388, it detects a minimum luminance level, a maximum luminance level and an average luminance level of the input image, amplifies a dynamic range of the input image decided by the maximum luminance level and minimum luminance level of the input image to a maximum dynamic range displayable on the image display apparatus and simultaneously controls the light source of the image display apparatus based on the average luminance level. According to a literature "SID Symposium Digest of Technical Papers, Volume 36, Issue 1, pp. 1380 to 1383," it detects the maximum luminance level of the input image, extends the maximum luminance level to a maximum gray-scale level displayable on the image display apparatus, and controls the light source of the image display apparatus so that the extended maximum gray-scale level matches with the detected maximum luminance level.
As for both the techniques, it is possible to amplify the contrast by controlling correction of the input image and luminescence intensity of the light source according to the input image in comparison with the image display apparatus of a constant light source luminance. However, the techniques are the methods of extending the dynamic range of the input image to the maximum dynamic range in which the input image is displayable on the image display apparatus. Therefore, the techniques do not take into consideration the dynamic range to be originally displayed by the input image. To be more specific, there is a possibility that the techniques may extend the dynamic range of the input image excessively.
Document WO 2005/093703 discloses a display comprising an adjustable light source independence on the image signal.

SUMMARY OF THE INVENTION

According to an aspect of the present invention, there is provided with an image display apparatus as set out in claim 1.
According to an aspect of the present invention, there is provided with an image display method as set out in claim 23.

BRIEF DESCRIPTION OF THE DRAWINGS

FIG. 1 is a diagram showing a configuration of an image display apparatus according to a first embodiment;
FIG. 2 is a flowchart showing a an operation flow of the image display apparatus;
FIG. 3 is a diagram showing look up table data associating a gray-scale level with a luminance;
FIG. 4 is a diagram showing two logarithmic coordinate systems and graphs drawn in the coordinate systems;
FIG. 5 is a diagram showing two logarithmic coordinate systems and graphs drawn in the coordinate systems;
FIG. 6 is a diagram showing the look up table data associating a minimum gray-scale level and a maximum gray-scale level of an input image with a light source luminance of a backlight;
FIG. 7 is a diagram showing a configuration connecting a ROM to a light source luminance setter;
FIG. 8 shows an appearance of histogram expansion;
FIG. 9 is a diagram showing a configuration connecting a ROM to a histogram expanding portion;
FIG. 10 is a diagram showing the look up table data (first table data) associating the minimum gray-scale level and maximum gray-scale level with a gain;
FIG. 11 is a diagram showing the look up table data (second table data) associating the minimum gray-scale level and maximum gray-scale level with an offset;

FIG. 12 is a diagram showing a projection image display;

FIG. 13 is a diagram showing a projection image display using a digital micro mirror device;

FIG. 14 is a diagram showing the configuration of the image display apparatus according to a second embodiment;

FIG. 15 is a diagram showing the projection image display using the digital micro mirror device and LED light sources of three primary colors of red, green and blue;

FIG. 16 is a diagram showing the configuration of the image display apparatus according to a third embodiment; and

FIG. 17 is a diagram showing a configuration having a level correcting portion added to a level-range detector.

## DETAILED DESCRIPTION OF THE INVENTION

(First Embodiment)

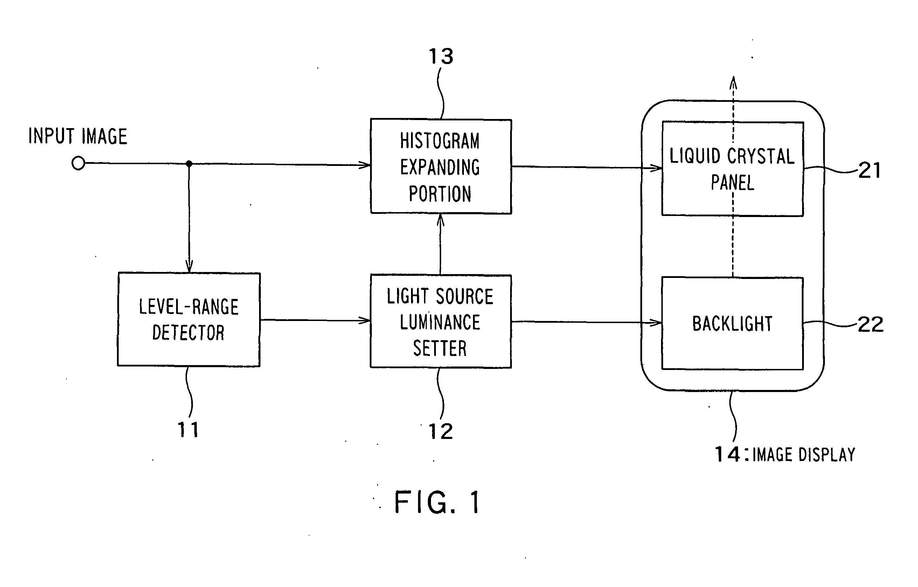

FIG. 1 shows a configuration of an image display apparatus according to a first embodiment of the present invention. The image display apparatus includes a level-range detector 11, a light source luminance setter 12, a histogram expanding portion 13 and an image display 14. The image display 14 is a liquid crystal display (referred to as an LCD hereafter) configured by a liquid crystal panel 21 as a light modulation device and a backlight 22 as a light source mounted on a backside of the liquid crystal panel 21. An input image is inputted to the level-range detector 11 and the histogram expanding portion 13. The level-range detector 11 detects the minimum gray-scale level and maximum gray-scale level of the input image. The light source luminance setter 12 sets an emission luminance (light source luminance) of the backlight 22 based on the minimum gray-scale level and maximum gray-scale level detected by the level-range detector 11. The histogram expanding portion 13 expands a level-range of the input image (histogram-expand) based on a gamma characteristic of the liquid crystal panel 21 and a backlight emission luminance set by the light source luminance setter 12. Lastly, the histogram-expanded input image is written to the liquid crystal panel 21, and the backlight 22 emits light simultaneously at the backlight emission luminance set by the light source luminance setter 12. Thus, the image is displayed on the image display 14. To be more specific, the image is displayed on the liquid crystal panel 21.

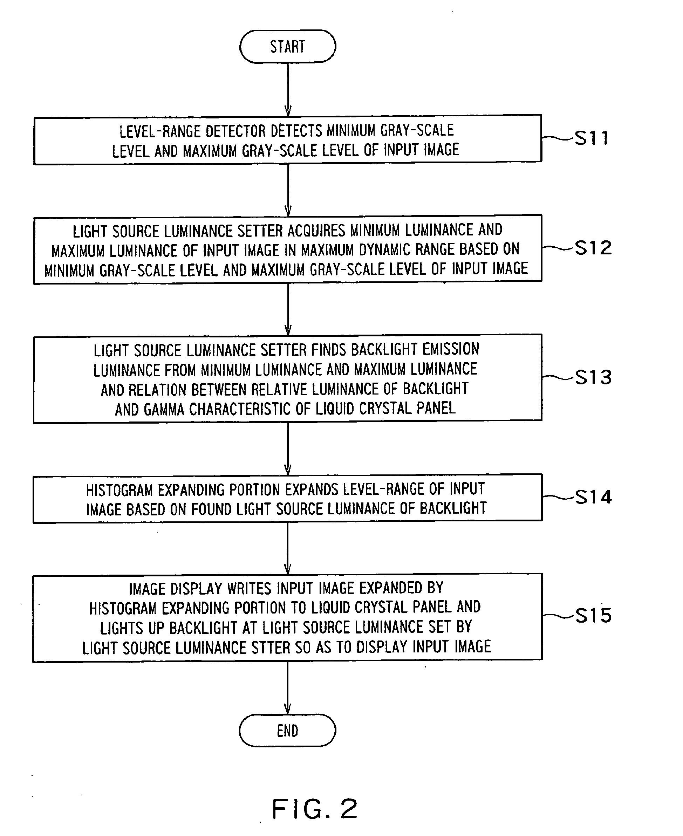

Next, operations of each portion of the image display apparatus in FIG. 1 will be described by referring to a flowchart showing an operation flow of the image display apparatus shown in FIG. 2.

(Level-Range Detector)

The level-range detector 11 detects the minimum gray-scale level and maximum gray-scale level of the input image (step S11). The input image generally undergoes a reverse gamma process, and the input image in this case has also undergone a reverse gamma process. However, this is just an example which does not limit the present invention. In the case where the input image is a moving image, the level-range detector 11 detects the minimum gray-scale level and maximum gray-scale level of the input image of one frame period. Any method may be used as the method of detecting the minimum gray-scale level and maximum gray-scale level. For instance, there is a method of acquiring a histogram (a horizontal axis is the gray-scale level, and a vertical axis is the number of pixels for instance) of the input image and acquiring the minimum gray-scale level and maximum gray-scale level from the histogram. In general, there are various methods as to the technique of detecting the minimum gray-scale level and maximum gray-scale level of the input image. As any of the methods is applicable to the present invention, a detailed description thereof will be omitted here.

(Light source luminance setter)

The light source luminance setter 12 sets the light source luminance of the backlight 22 based on the minimum gray-scale level and maximum gray-scale level of the input image detected by the level-range detector 11. This will be described in detail below.

The light source luminance setter 12 has a maximum dynamic range of the image display 14 set thereto in advance based on a characteristic of the liquid crystal panel 21 and a luminance modulation range of the backlight. The maximum dynamic range is analytically expressed by Formula 1.

## [Formula 1]

$$D_{min} = I_{min}T_{min}$$

$$D_{max} = I_{max}T_{max}$$

Here, $D_{min}$ and $D_{max}$ represent a minimum display luminance and a maximum display luminance displayable on the image display 14 respectively. $I_{min}$ and $I_{max}$ represent a minimum modulation luminance and a maximum modulation luminance which are a modulation range of the backlight respectively. $T_{min}$ and $T_{max}$ represent a minimum transmittance and a maximum transmittance of the liquid crystal panel 21 respectively. Analytically, the maximum dynamic range is represented as Formula 1. As for $D_{min}$ and $D_{max}$ in reality, however, the minimum display luminance displayable on the image display 14 should be a measured luminance of the image display 14 in the case of displaying the minimum gray-scale level displayable on the liquid crystal panel 21 (0 level in the case of the liquid crystal panel capable of 8-bit expression) at a minimum backlight luminance in the luminance modulation range of the backlight 22. Similarly, the maximum display luminance displayable on the image display 14 should be a measured luminance of the image display 14 in the case of displaying the maximum gray-scale level displayable on the liquid crystal panel 21 (255 levels in the case of the liquid crystal panel capable of 8-bit expression) at a maximum backlight luminance in the luminance modulation range of the backlight 22.

The light source luminance setter 12 acquires the minimum luminance and maximum luminance of the input image in the maximum dynamic range based on the minimum gray-scale level and maximum gray-scale level of the input image detected by the level-range detector 11 (step S12). The minimum luminance and maximum luminance can be calculated based on Formula 2.

## [Formula 2]

$$Y_{min} = \left(\frac{L_{min}}{255}\right)^{\gamma}(D_{max} - D_{min}) + D_{min}$$

$$Y_{max} = \left(\frac{L_{max}}{255}\right)^{\gamma}(D_{max} - D_{min}) + D_{min}$$

Here, $Y_{min}$ and $Y_{max}$ represent the minimum luminance and the maximum luminance. $L_{min}$ and $L_{max}$ represent the minimum gray-scale level and the maximum gray-scale level. $\gamma$ indicates a gamma value used for a correction of the input image. Generally, 2.2 is used as the gamma value. Formula 2 is a so-called reverse gamma correction process. According to this embodiment, however, the reverse gamma correction is applied between the maximum dynamic ranges of the image display 14. To be more specific, the reverse gamma correction is performed in such a way as to put $Y_{min}$ and $Y_{max}$ in the maximum dynamic range.

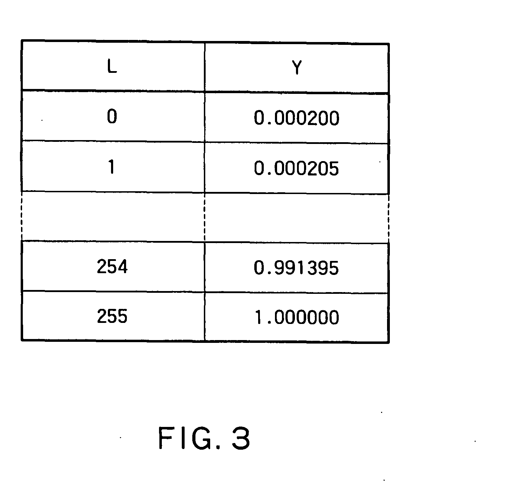

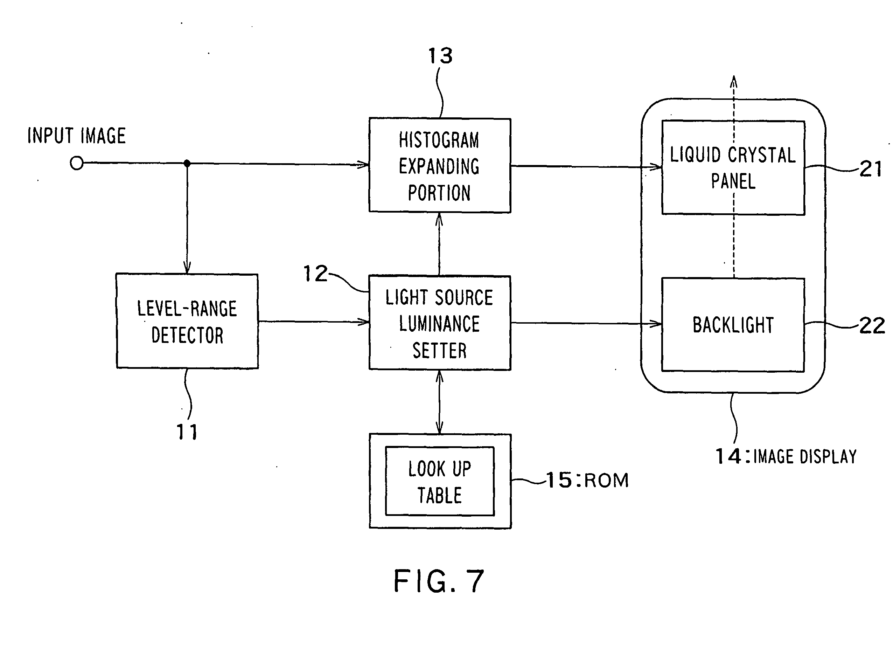

The minimum luminance and the maximum luminance may be calculated by using Formula 2. However, the following is also possible. For instance, $D_{min}$ and $D_{max}$ are determined and then look up table (LUT) data associating the gray-scale level L with the luminance Y is created from a relation between the gray-scale level L and the luminance Y. FIG. 3 shows an example of the table data. And the created table data is stored in a ROM (Read Only Memory) 15 or the like accessible by the light source luminance setter 12 as shown in FIG. 7. The ROM is corresponding to a memory (a table storing portion) for instance. When seeking the minimum luminance $Y_{min}$ and the maximum luminance $Y_{max}$, the light source luminance setter 12 refers to the ROM 15 by the minimum gray-scale level $L_{min}$ and the maximum gray-scale level $L_{max}$ detected from the input image so as to acquire $Y_{min}$ and $Y_{max}$ respectively. It is also possible to prepare multiple pieces of the table data in the ROM 15 according to combinations of values of $D_{min}$ and $D_{max}$ so as to refer to the table data of a relevant combination.

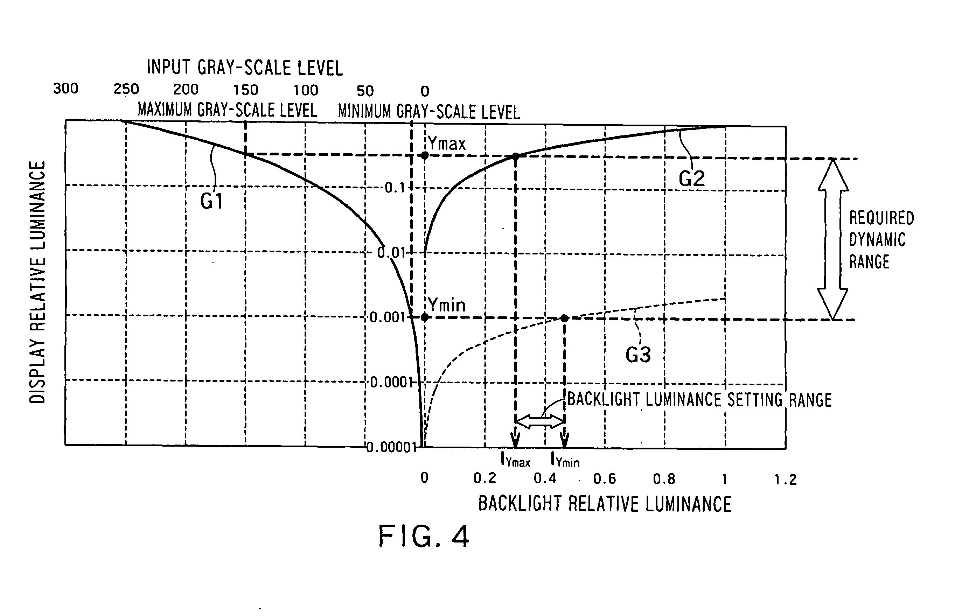

Next, the backlight emission luminance is found from the minimum luminance and maximum luminance thus calculated and the relation between a relative luminance of the backlight and the gamma characteristic of the liquid crystal panel (step S13). The method of calculating the backlight emission luminance will be described in detail by using FIG. 4.

In FIG. 4, there are two logarithmic coordinate systems apposed on the right and left. The coordinate system on the left has the gray-scale level of the input image as the horizontal axis and a display relative luminance as the vertical axis. The coordinate system on the right has the backlight relative luminance as the horizontal axis and the display relative luminance as the vertical axis.

A graph G1 is shown in the coordinate system on the left. The graph G1 shows the relation between the gray-scale level of the input image and the display relative luminance in the maximum dynamic range of the image display 14 acquired above. The gamma value is 2.2, $D_{max}$ is 1 and $D_{min}$ is 0 (to be more specific, the minimum light source luminance of the backlight luminance is 0). This relation is equivalent to Formula 2. In the case where the maximum gray-scale level is 150 levels as shown in FIG. 4 for instance, the display relative luminance in that case is approximately 0.3 (in the case where the maximum relative luminance is 1). This value is equivalent to $Y_{max}$ of Formula 2. Similarly, in the case where the minimum gray-scale level is 11 levels, the display relative luminance in that case is approximately 0.001. This value is equivalent to $Y_{min}$ of Formula 2.

The coordinate system on the right shows a solid graph G2 and a dashed graph G3. The graphs G2 and G3 show the relation between the relative luminance of the backlight 22 and the gamma characteristic of the liquid crystal panel 21. To be more precise, the graph G2 shows the relation between the display relative luminance and the relative luminance of the backlight 22 (an LCD display relative luminance curve of 255 levels) in the case of displaying 255 levels on the liquid crystal panel 21. The graphs G3 shows the relation between the display relative luminance and the relative luminance of the backlight 22 (the LCD display relative luminance curve of 0 level) in the case of displaying 0 level on the liquid crystal panel 21. The lower the backlight relative luminance is, the lower the display relative luminance becomes as to both the graphs G2 and G3.

Here, the dynamic range displayable on the LCD at a certain backlight relative luminance is between the graph G3 (the LCD display relative luminance curve of 0 level) and the graph G2 (the LCD display relative luminance curve of 255 levels). In the case where the maximum gray-scale level of the input image is 150 levels for instance, the display relative luminance thereof is approximately 0.3 according to the graph G1 on the left. As for the display relative luminance, in the case of displaying 255 levels on the liquid crystal panel 21, it is displayable, as is understandable, by setting the backlight relative luminance at approximately 0.3 or more according to the graph G2 on the right. This value is the maximum light source luminance (first light source luminance) $I_{Ymax}$. Similarly, in the case where the minimum gray-scale level of the input image is 11 levels, the display relative luminance thereof is approximately 0.001 according to the graph G1 on the left. As for the display relative luminance, in the case of displaying 0 level of on the liquid crystal panel 21, it is displayable, as is understandable, by setting the backlight relative luminance at approximately 0.48 or less according to the graph G3 on the right. This value is the minimum light source luminance (second light source luminance) $I_{Ymin}$.

It is understandable from the above that the input image is displayable in the maximum dynamic range of the image display 14 ($D_{min}$ to $D_{max}$) by setting the light source luminance of the backlight 22 at 0.3 as the maximum light source luminance or more and 0.48 as the minimum light source luminance or less. The light source luminance of the backlight 22 may be any value between the maximum light source luminance and the minimum light source luminance. However, it is advantageous to lower it as much as possible from the viewpoint of suppressing increase in power consumption. Thus, according to this embodiment, the maximum light source luminance whereby the light source luminance becomes lowest between the maximum light source luminance and the minimum light source luminance is set as the light source luminance of the backlight 22.

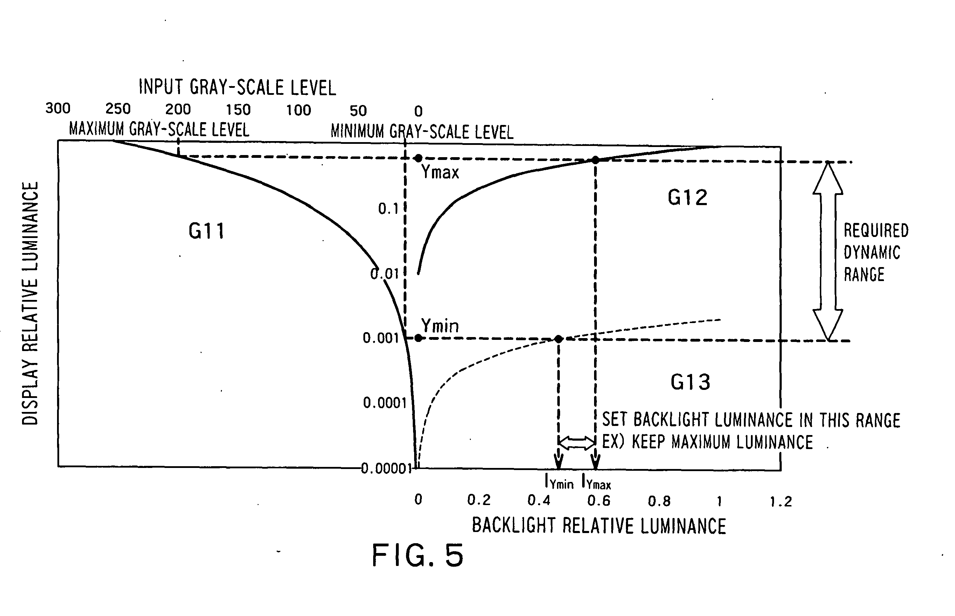

The above described the method of setting the light source luminance of the backlight 22 in the case where the maximum light source luminance $I_{Ymax}$ is equal to or lower than the minimum light source luminance $I_{Ymin}$. However, there are the cases where the maximum light source luminance is higher than the minimum light source luminance depending on the input image. The method of setting the light source luminance of the backlight in these cases will be described by using FIG. 5.

FIG. 5 shows the same graphs as FIG. 4. A graph G11 on the left shows the relation between the gray-scale level of the input image (horizontal axis) and the display relative luminance (vertical axis) while graphs G12 and G13 on the right show the relations between the backlight relative luminance (horizontal axis) and the display relative luminance (vertical axis). In FIG. 5, the maximum gray-scale level of the input image is 200 levels, and the display relative luminance in that case is approximately 0.59 ($Y_{max}$). As for the display relative luminance, in the case of displaying 255 levels on the liquid crystal panel 21, it is displayable, as is understandable, by setting the backlight relative luminance at approximately 0.59 ($I_{Ymax}$) or more according to the graph G12 on the right. As the minimum gray-scale level of the input image is 11 levels as with FIG. 4, the display relative luminance thereof is approximately 0.001 ($Y_{min}$) according to the graph G11 on the left. As for the display relative luminance, in the case of displaying 0 level on the liquid crystal panel 21, it is displayable by setting the backlight relative luminance at approximately 0.48 ($I_{Ymin}$) or less according to the graph G13 on the right. To be more specific, it is necessary to set the backlight relative luminance at approximately 0.59 or more in order to display the display relative luminance equivalent to the maximum gray-scale level of the input image. And it is necessary to set the backlight relative luminance at approximately 0.48 or less in order to display the display relative luminance equivalent to the minimum gray-scale level of the input image. For this reason, it is not possible to display the minimum gray-scale level to the maximum gray-scale level of the input image at a unique backlight relative luminance in the maximum dynamic range of the image display. In this case, the maximum light source luminance is set as the light source luminance of the backlight 22 in order to keep the maximum luminance of the input image. There is also another method of acquiring an average gray-scale level of the input image and setting the light source luminance of the backlight 22 between the minimum light source luminance and the maximum light source luminance based on the average gray-scale level. To be more specific, the light source luminance of the backlight 22 is set further on the maximum light source luminance side as the average gray-scale level of the input image becomes higher. This is because, it is better to display the maximum luminance more correctly in the case where the average gray-scale level is high since the input image includes a lot of high-gray-scale level pixels, and inversely, it is better to display the minimum luminance more correctly in the case where the average gray-scale level is low since the input image includes a lot of low-gray-scale level pixels. In the case of setting the light source luminance of the backlight 22 based on the average gray-scale level, a backlight light source luminance. I can be found through Formula 3 by using the minimum light source luminance $I_{Ymin}$ and the maximum light source luminance $I_{Ymax}$.

[Formula 3]

$$I = \alpha I_{Ymax} + (1 - \alpha) I_{Ymin}$$

Here, $\alpha$ is a coefficient between 0 and 1 acquired from the average gray-scale level of the input image, which can be given as a function that gets closer to 1 as the average gray-scale level becomes higher.

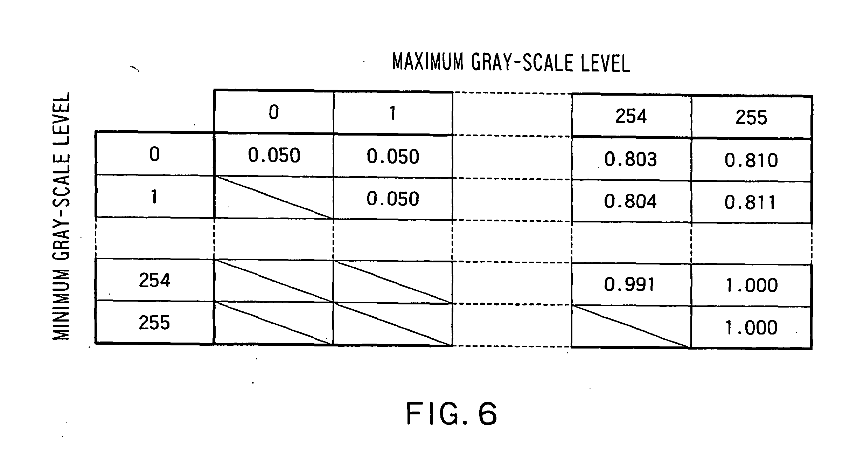

It is also possible to hold the relation between the minimum gray-scale level and the maximum gray-scale level of the input image and the light source luminance of the backlight 22 to be set as table data in the ROM or the like. In this case, it is not necessary to perform all the processes described above. To be more specific, as shown in FIG. 6, look up table (LUT) data associating the minimum gray-scale level and the maximum gray-scale level of the input image with the light source luminance of the backlight 22 should be prepared in advance. However, it is not necessary to hold the values in the lower half from a diagonal line of the table because of the minimum gray-scale level $\leq$ the maximum gray-scale level. This table data is stored in the ROM 15 accessible by the light source luminance setter 12 as shown in FIG. 7. The light source luminance setter 12 acquires the light source luminance of the backlight 22 by referring to the table data in the ROM 15 based on the minimum gray-scale level and the maximum gray-scale level obtained by the level-range detector 11. Furthermore, in the case where the average gray-scale level is required in order to find the light source luminance of the backlight 22, the table data associating the minimum gray-scale level, maximum gray-scale level and average gray-scale level of the input image with the light source luminance of the backlight 22 should be prepared likewise in the ROM 15. And the light source luminance setter 12 should find the light source luminance of the backlight 22 by referring to the table data.

(Histogram Expanding Portion)

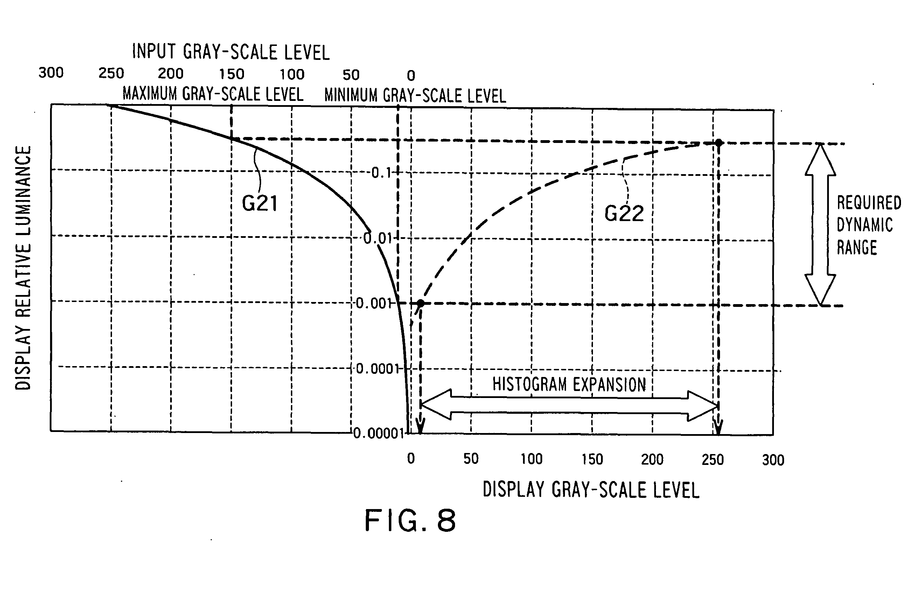

The histogram expanding portion 13 expands the histogram of the input image based on the light source luminance of the backlight 22 found by the light source luminance setter 12 (step S14). The operation of the histogram expansion will be described by using FIG. 8.

FIG. 8 shows an appearance of the histogram expansion in the case where the minimum gray-scale level of the input image is 11 levels, the maximum gray-scale level is 150 levels and the light source luminance of the backlight 22 is set at 0.3 by the light source luminance setter 12.

There are two graphs G21 and G22 apposed on the right and left. The graph G21 on the left as one faces shows the relation between the gray-scale level of the input image (horizontal axis) and the display relative luminance (vertical axis). The graph G22 on the right shows the relation between an output gray-scale level (display gray-scale level) after the histogram expansion (horizontal axis) and the display relative luminance (vertical axis). The graph on the left of FIG. 8 is the same as the graph on the left of FIG. 4, and so a description thereof will be omitted.

The graph G22 on the right represents the gamma characteristic (gamma characteristic of the liquid crystal panel) of the LCD (image display) in the case where the relative luminance (light source luminance) of the backlight 22 is set at 0.3. The minimum luminance and the maximum luminance equivalent to the minimum gray-scale level and the maximum gray-scale level of the input image are 0.001 and 0.3 according to the graph G21 on the left respectively. Thus, according to the graph G22 on the right, it is understandable that the minimum luminance can be displayed by displaying 12 levels on the LCD and the maximum luminance can be displayed by displaying 255 levels on the LCD. To be more specific, it is possible to display the minimum luminance to the maximum luminance of the input image by displaying the gray-scale level in the range of 12 to 255 levels on the LCD. To be more specific, it histogram-expands 11 to 150 levels of the input image to 12 to 255 levels.

In the case where the light source luminance setter 12 has the maximum light source luminance higher than the minimum light source luminance, that is, in the case where the minimum luminance to the maximum luminance of the input image cannot be displayed by a unique light source luminance of the backlight 22, the histogram expansion is performed in the maximum displayable range (0 to 255 levels in the case of 8 bits) of the liquid crystal panel (light modulation device) 21.

The following analytically shows the processing of the histogram expanding portion 13 described above.

First, the minimum gray-scale level and the maximum gray-scale level of the input image are converted to the minimum gray-scale level and the maximum gray-scale level of an output image (display image) by using Formula 4 based on the backlight light source luminance set by the light source luminance setter 12.

## [Formula 4]

$$l_{min} = \begin{cases} 0 & I = 0 \\ \left( \dfrac{Y_{min} - T_{min}I}{(T_{max} - T_{min})I} 255^{r} \right)^{1/r} & I_{Ymin} > I_{Ymax} \\ 0 & otherwise \end{cases}$$

$$l_{max} = \begin{cases} 0 & I = 0 \\ \left( \dfrac{Y_{max} - T_{min}I}{(T_{max} - T_{min})I} 255^{r} \right)^{1/r} & I_{Ymin} > I_{Ymax} \\ 255 & otherwise \end{cases}$$

Here, $l_{min}$ and $l_{max}$ are the minimum gray-scale level and the maximum gray-scale level after the histogram expansion, and r is a gamma value of the image display (LCD) for displaying. The gamma value is generally 2.2, and it matches with $\gamma$ which is the gamma value of the input image.

Next, a gain and an offset for performing the histogram expansion of the input image are calculated through Formula 5 by using the minimum gray-scale level $L_{min}$ and the maximum gray-scale level $L_{max}$ of the input image and the minimum gray-scale level $l_{min}$ and the maximum gray-scale level $l_{max}$ of the output image.

## [Formula 5]

$$G = \begin{cases} 1 & L_{max} = L_{min} \\ \dfrac{l_{max} - l_{min}}{L_{max} - L_{min}} & otherwise \end{cases}$$

$$O = l_{min} - GL_{min}$$

Here, G and O represent the gain and offset for performing the histogram expansion of the input image.

Lastly, the gray-scale level of each individual pixel of the input image is histogram-expanded through Formula 6 by using the acquired gain and offset.

## [Formula 6]

$$l(x, y) = GL(x, y) + O$$

Here, L (x, y) represents the gray-scale level at a position (x, y) on the input image, and I(x, y) represents the gray-scale level at a position (x, y) on the output image after the histogram expansion.

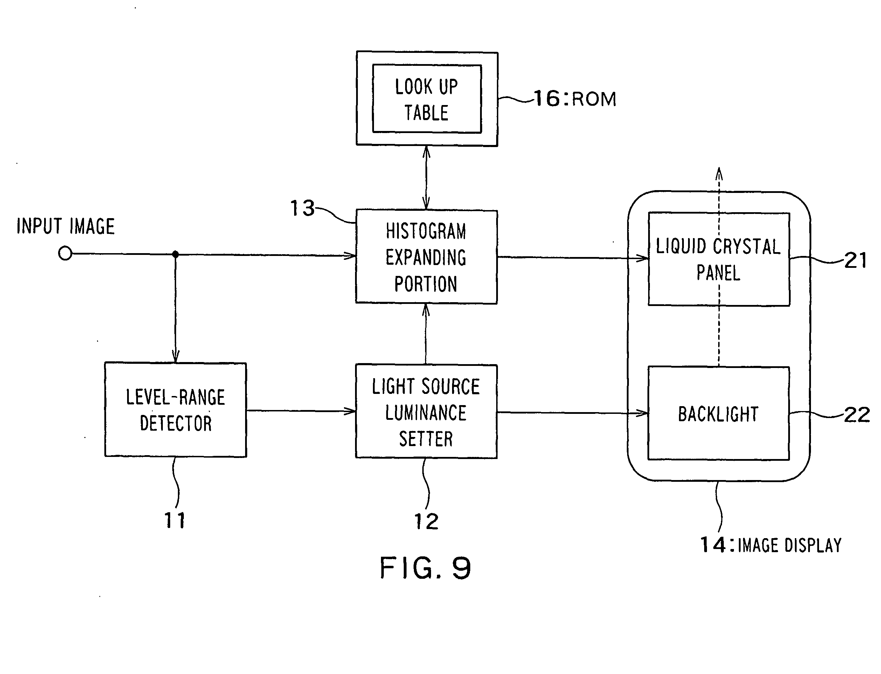

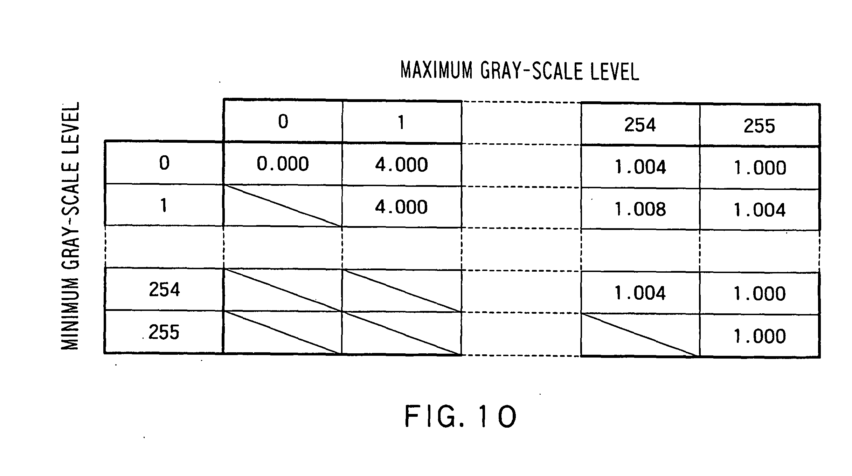

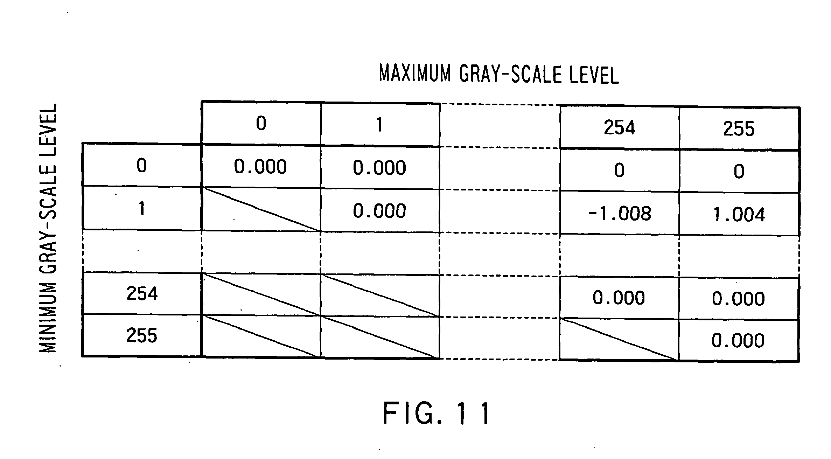

As heretofore, the above-mentioned calculations do not always have to be performed, and the following may be implemented. To be more specific, the look up table data associating the minimum gray-scale level and the maximum gray-scale level with the gain (first table data) should be prepared, and the look up table data associating the minimum gray-scale level and the maximum gray-scale level with the offset (second table data) should also be prepared. FIG. 10 shows an example of the first table data, and FIG. 11 shows an example of the second table data. As for the table data of FIGS. 10 and 11, however, it is not necessary to hold the values in the lower half from the diagonal line because of the minimum gray-scale level ≤ the maximum gray-scale level. The first and second table data thus prepared is stored in the ROM 16 or the like accessible by the histogram expanding portion 13 as shown in FIG. 9. On the histogram expansion, the minimum gray-scale level and the maximum gray-scale level are detected from the input image, and the gain G and offset O are acquired by referring to the first and second table data based on the detected minimum gray-scale level and maximum gray-scale level. Thereafter, the histogram of the input image can be expanded by performing the calculation according to Formula 6.

(Image Display)

As described above, the image display 14 is configured by the liquid crystal panel 21 as the light modulation device and the backlight 22 mounted on a backside of the liquid crystal panel 21 and capable of modulating the luminance of the light source. The image display 14 writes signals of the input image expanded by the histogram expanding portion 13 to the liquid crystal panel (light modulation device) 21 and lights up the backlight at the light source luminance of the backlight (light source) 22 set by the light source luminance setter 12 so as to display the input image (step S15).

Here, a cold-cathode tube, a light-emitting diode (LED) and the like can be used as the light source of the backlight 22. As for these, it is possible to modulate the luminance by controlling a voltage and a current to be applied. However, there is generally used PWM (Pulse Width Modulation) control whereby the luminance is modulated by switching the periods of light-emitting and non-light-emitting at high speed. This embodiment uses a technique of modulating an LED light source of which luminescence intensity is relatively easy to control by means of the PWM control.

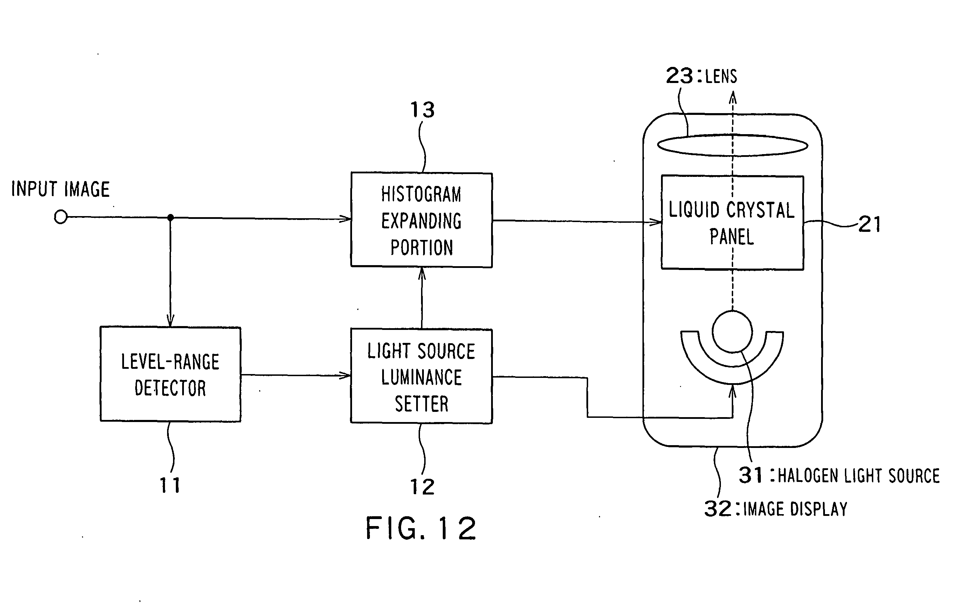

The image display was configured as a transmissive LCD combining the liquid crystal panel 21 and the backlight 22 as described above. It may also be a projection image display (projector) 32 combining the light source such as a halogen light source 31, the liquid crystal panel 21 and a lens 23 as shown in FIG. 12. FIG. 12 shows the projection image display of a single-panel (using one liquid crystal panel) method. However, it is not limited to the single-panel method but may also be the projection image display using multiple liquid crystal panels (three panels for red, blue and green in general).

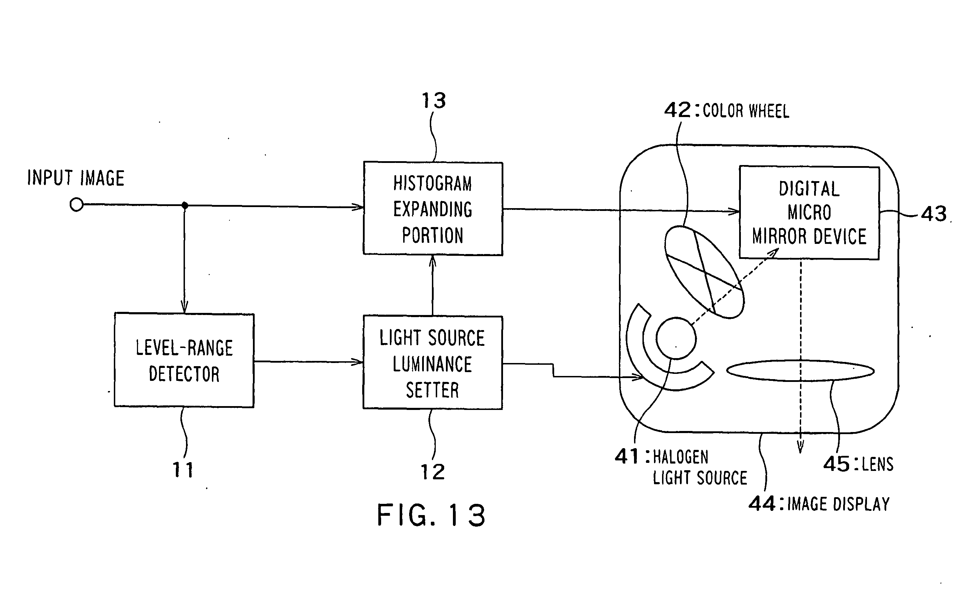

Furthermore, as shown in FIG. 13, it may also be a projection image display 44 using a digital micro mirror device 43 for displaying the image by controlling reflection of the light from the light source such as a halogen light source 41 as the light modulation device. A color wheel 42 for expressing colors is mounted between the halogen light source 41 and the digital micro mirror device 43, that is, on an optical axis of the light source for emitting white light. The color wheel 42 is divided into regions where transmitted colors become red, green and blue for instance. When the color wheel 42 on the optical axis of the light source is red, the color of the light source reaching the digital micro mirror device 43 becomes red. At the same time, an image of a red component of the input image is displayed on the digital micro mirror device 43. The light reflected on the digital micro mirror device 43 is outputted via a lens 45. The same is performed as to green and blue hereafter, and switching thereof is performed so fast as to display a color image. Thus, the luminance of the halogen light source 41 shown in FIG. 13 should be modulated by the color of the color wheel 42 on the optical axis. At the same time, the image of each individual color component of the input image to be displayed on the digital micro mirror device 43 should be histogram-expanded according to this embodiment.

As described above, it is possible, according to this embodiment, to display the image of a good visual contrast in the dynamic range originally held by the input image.

(Second Embodiment)

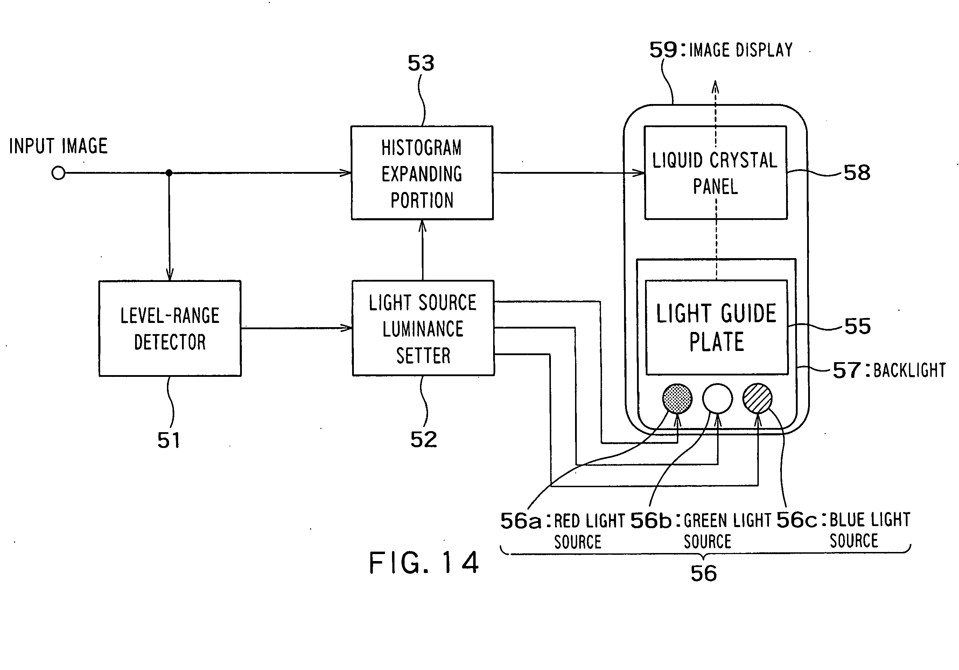

FIG. 14 shows the configuration of the image display apparatus according to a second embodiment of the present invention. The image display apparatus according to the second embodiment is the same as that of the first embodiment as to its basic configuration except that a backlight 57 includes light sources 56 of the three primary colors having a red light source 56a, a green light source 56b and a blue light source 56c and a light guide plate 55. The luminance of each of the light sources 56a to 56c is independently controllable. The operation of each individual portion will be described below.

(Level-Range Detector)

A level-range detector 51 detects the minimum gray-scale level and maximum gray-scale level per component of red, green and blue of the input image. As is well known, the color image is generally configured according to proportion of intensity of the red, green and blue components. The level-range detector 51 according to this embodiment detects the minimum gray-scale level and the maximum gray-scale level independently by each of the components.

(Light source luminance setter)

A light source luminance setter 52 sets the light source luminances of red, green and blue by using a minimum gray-scale level and a maximum gray-scale level of each of red, green and blue detected by the level-range detector 51. As the method of setting the light source luminance is the same as that of the first embodiment, a description thereof will be omitted here.

Here, it is configured to find the emission luminance of each of the light sources of red, green and blue independently. It is also possible, however, to use a method of correcting the light source luminance so that the light source luminance will not differ greatly. To be more specific, a correction is made to the light source luminance of a luminescent color of which ratio to the light source luminance of the luminescent color having the maximum light source luminance is less than a predetermined value out of the light source luminance so that the ratio to the maximum light source luminance becomes the predetermined value or more. To be more precise, in the case where the light source luminance of red, green and blue are found as 1, 0.5 and 0.8 when the predetermined value (ratio) is set at 0.7, the light source luminance of green 0.5 is at a ratio of 0.5 to the light source luminance of red 1.0 so that the light source luminance of green is corrected to 0.7. Such a correction is effective in the following case.

In general, the liquid crystal panel has color filters of red, green and blue mounted on each of the pixels. As the light passes through the color filters, the light is colored by the colors of the color filters and the color image is displayed on the liquid crystal panel. Spectral characteristics of the color filters are normally different from the spectral characteristics of the light sources of red, green and blue (light-emitting diodes are often used). Therefore, in the case where red and blue of 0 level are written to the pixels of the liquid crystal panel and only a green light source is emitting light, the light emission of the green light source leaks from the pixels of red and blue. For that reason, in the case where the light source luminances of red, green and blue differ greatly, a color shift occurs on the display image by the leaking light. Thus, it is possible to prevent the occurrence of the color shift by correcting the ratio of the light source luminance of red, green and blue to be at least a certain ratio and reducing the differences among the light source luminance. The ratio should be a different value according to the combination of the liquid crystal panel for use and the light source for use. Under ordinary circumstances, however, the ratio should be set at 0.5 to 0.8 or so. Furthermore, the ratio can be a different value according to the input image.

(Histogram Expanding Portion)

A histogram expanding portion 53 performs the histogram expansion as to the red, green and blue components of the input image independently based on the light source luminance of red, green and blue set by the light source luminance setter 52. As for a histogram expansion process, the same process as the first embodiment should be performed to each of the red, green and blue components of the input image and so a description thereof will be omitted here.

(Image Display)

An image display 59 according to this embodiment is a transmissive liquid crystal display consisting of a liquid crystal panel 58 as the light modulation device and the backlight 57. The backlight 57 is configured by the light sources 56 (red light source 56a, green light source 56b and blue light source 56c) capable of independently controlling the emission luminance of the three primary colors of red, green and blue and the light guide plate 55. The light sources 56a to 56c are light-emitting diodes (LEDs) of red, green and blue. However, the configuration of the image display is not limited to the above configuration.

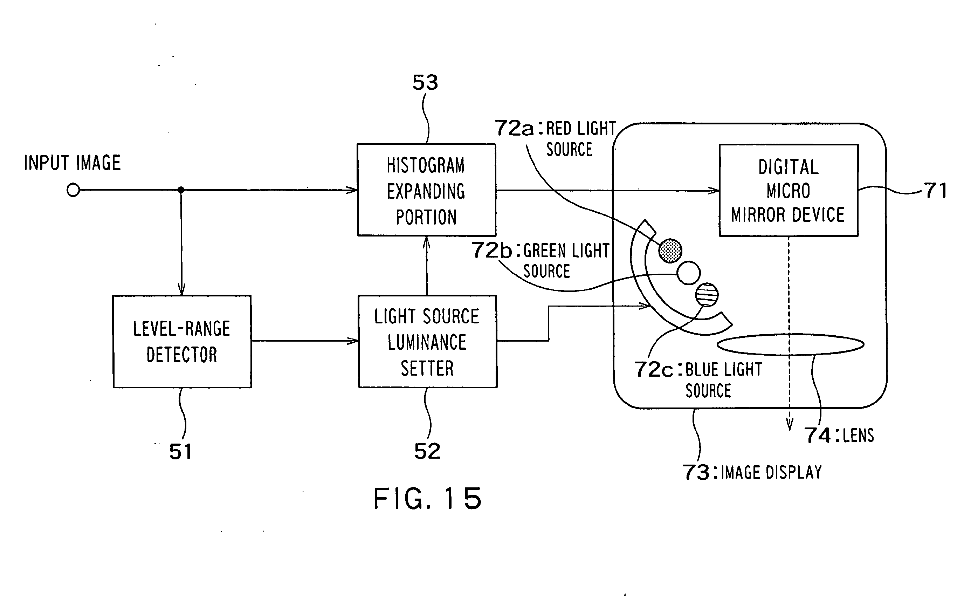

As shown in FIG. 15 for instance, it may be a projection image display 73 combining a digital micro mirror device 71 as the light modulation device, LED light sources 72a to 72c of the three primary colors of red, green and blue and a lens 74. The same effects as FIG. 14 can be obtained by switching the light emission of red, green and blue of the LED light sources 72a to 72c at high speed timewise.

As described above, it is possible, according to this embodiment, to display the image of a good visual contrast in the dynamic range originally held by the input image.

(Third Embodiment)

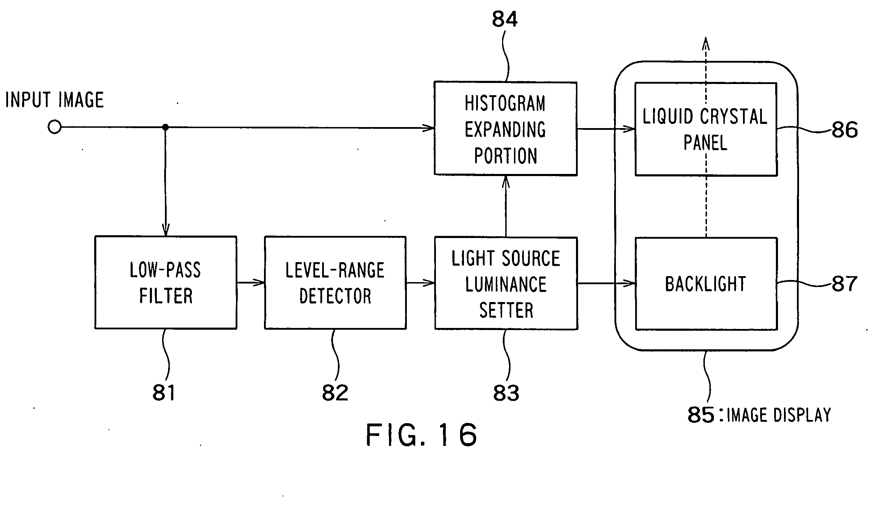

FIG. 16 shows the configuration of the image display apparatus according to a third embodiment of the present invention. The image display apparatus according to the third embodiment is basically the same as that of the first embodiment except that a low-pass filter 81 is newly mounted before a level-range detector 82. The operation of each individual portion will be described below.

(Low-Pass Filter)

The low-pass filter 81 suppresses a high-pass component (high-frequency component) of the input image by passing the input image through a low-pass filter. Various methods are considerable as to the low-pass filter. However, this embodiment took the method of convolving a 5-tap kernel in the input image. The coefficient of the 5-tap kernel is a Gaussian filter of standard deviation 1 as shown in Formula 7.

$$[\text{Formula 7}]$$

$$\begin{bmatrix} 0.003 & 0.013 & 0.022 & 0.013 & 0.003 \\ 0.013 & 0.06 & 0.0985 & 0.06 & 0.013 \\ 0.022 & 0.0985 & 0.162 & 0.0985 & 0.022 \\ 0.013 & 0.06 & 0.0985 & 0.06 & 0.013 \\ 0.003 & 0.013 & 0.022 & 0.013 & 0.003 \end{bmatrix}$$

The high-pass component of the input image is suppressed by convolving the kernel shown in Formula 7 in the input image.

Next, the effects of the low-pass filter 81 will be described. The input image includes various noise components such as analog noise and compression noise. In the case of detecting the minimum gray-scale level and the maximum gray-scale level as-is from such an input image, there is a possibility, due to influence of the noise, that the noise components may be detected as the minimum gray-scale level and the maximum gray-scale level rather than the original minimum gray-scale level and maximum gray-scale level of the input image. In the case of detecting the minimum gray-scale level and the maximum gray-scale level as-is when the input image includes a spatially isolated point region, there is a possibility that the minimum gray-scale level and the maximum gray-scale level of a very small region may be detected. In the first and second embodiments, the dynamic range of the input image is detected as the minimum gray-scale level to the maximum gray-scale level of the input image. Even if the dynamic range of the input image including the noise and spatially very small region is displayed correctly, however, the effect of enhancing the visual contrast cannot be expected in particular by an observer of the image display apparatus. Thus, it becomes possible, as with this embodiment, to suppress the high-pass component of the input image and further enhance the visual contrast by implementing the low-pass filter to the input image.

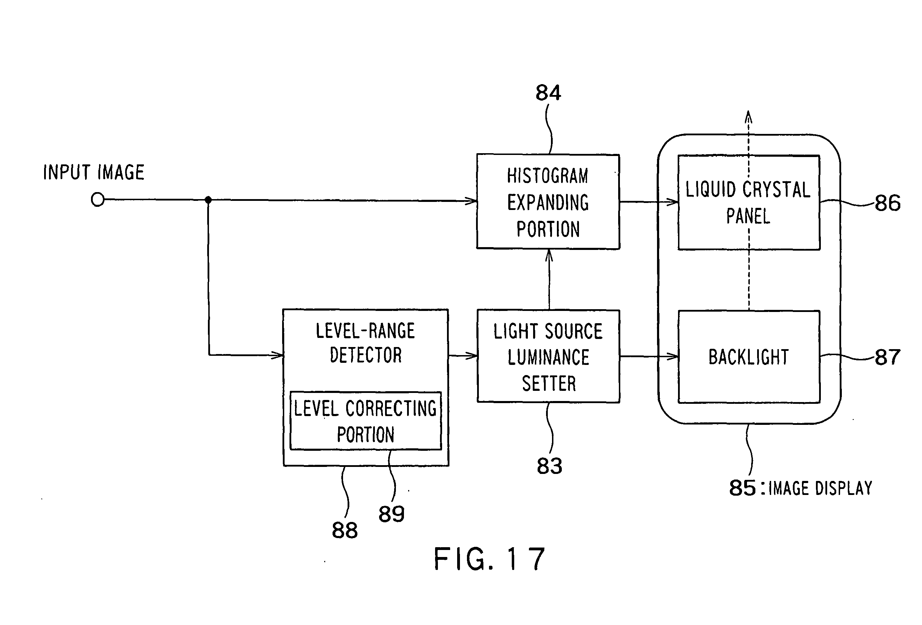

Here, the configuration of mounting the low-pass filter 81 before the level-range detector 82 is shown. However, as shown in FIG. 17 for instance, it is also possible to add a level correcting portion 89 to a level-range detector 88. The level correcting portion 89 detects the pixels of a predetermined ratio of the entire number of pixels from the pixels of the minimum gray-scale level in the input image, and corrects all the levels of each of the detected pixels to the maximum gray-scale level included in the detected pixel. Likewise, it detects the pixels of the predetermined ratio of the entire number of pixels from the pixels of the maximum gray-scale level, and corrects all the levels of each of the detected pixels to the minimum gray-scale level included in the detected pixel. The following shows a concrete example.

The predetermined ratio is 0.01, the minimum gray-scale level of the input image is 10, and the maximum gray-scale level is 150. The maximum gray-scale level of each of the pixels of (the entire number of pixels of the input image) x 0.01 when counted from the pixels of the minimum gray-scale level is 15, and the minimum gray-scale level of each of the pixels of (the entire number of pixels of the input image) x 0.01 when counted from the pixels of the maximum gray-scale level is 140. In this case, all the pixels of 10 levels to 15 levels of the input image are corrected to 15 levels, and all the pixels included in 140 levels to 150 levels of are corrected to 140 levels. As this configuration can exclude an outlier of the gray-scale level included in the input image, the same effects as the low-pass filter can be obtained.

(Level-Range Detector)

Returning to FIG. 16, the level-range detector 82 detects the minimum gray-scale level and the maximum gray-scale level as to the input image of which high-pass component is suppressed by the low-pass filter 81 by the same operation as the first embodiment. As the concrete operation is the same as the first embodiment, a description thereof will be omitted here.

(Light source luminance setter)

As the operation of a light source luminance setter 83 is also the same as the first embodiment, a description thereof will be omitted here.

(Histogram Expanding Portion)

A histogram expanding portion 84 performs the histogram expansion of the input image as with the first embodiment. Due to the low-pass filter 81 or the level correcting portion 89, however, there is a possibility that the minimum gray-scale level and the maximum gray-scale level acquired by the level-range detector may be different values from the minimum gray-scale level and maximum gray-scale level of the actual input image. Thus, an additional process for coping with this is performed. Further details are as follows.

There is a possibility that the minimum gray-scale level detected by the level-range detector 82 or the level-range detector 88 may be higher than the minimum gray-scale level of the input image, and the maximum gray-scale level detected by the level-range detector may be lower than the maximum gray-scale level of the input image. For that reason, there are the cases where, as a result of performing the histogram expansion of the input image, the gray-scale level of the input image is converted to a gray-scale level lower than the minimum gray-scale level (0 level) displayable by an image display 85 (configured by a liquid crystal panel 86 and a backlight 87) or converted to a gray-scale level higher than the maximum gray-scale level (255 levels in the case of 8 bits) displayable by the image display 85. Thus, the histogram expanding portion 84 of this embodiment corrects the level converted to the gray-scale level lower than the minimum gray-scale level displayable by the image display 85 to the minimum gray-scale level displayable by the image display 85, and corrects the gray-scale level converted to the gray-scale level higher than the maximum gray-scale level displayable by the image display 85 to the maximum gray-scale level displayable by the image display 85. As the pixels to be corrected are a small number of pixels in the input image, it causes no visual problem to perform the above-mentioned process.

(Image Display)

The operation of the image display 85 is the same as that in the first embodiment, and so a description thereof will be omitted.

As described above, according to this embodiment, it is possible, even if the noise components are included in the input image, to display the image of a good visual contrast in the original dynamic range of the input image.

**Claims**

**1.** An image display apparatus comprising:

an image display including a light source capable of adjusting a light source luminance and a light modulation device displaying an image by modulating a transmittance or a reflectance of light from the light source based on signals representing the image, wherein a minimum display luminance displayable on the image display depends on a minimum transmittance or a minimum reflectance of the light modulation device and a minimum modulation luminance in a predetermined luminance modulation range of the light source, a maximum display luminance displayable on the image display depends on a maximum transmittance or a maximum reflectance of the light modulation device and a maximum backlight luminance in the predetermined luminance modulation range of the light source;
a level-range detector configured to detect a minimum gray-scale level and a maximum gray-scale level of an input image;
a light source luminance setter configured to acquire a minimum luminance to be displayed based on the minimum gray-scale level of the input image, the minimum display luminance displayable on the image display and the maximum display luminance displayable on the image display; acquire a maximum luminance to be displayed based on the maximum gray-scale level of the input image, the minimum display luminance displayable on the image display and the maximum display luminance displayable on the image display; acquire a maximum light source luminance capable of displaying the minimum luminance to be displayed;

acquire a minimum light source luminance capable of displaying the maximum luminance to be displayed;

find a light source luminance to be set to the light source based on the maximum light source luminance and the minimum light source luminance, and

set found light source luminance to the light source; and

a histogram expanding portion configured to expand a level-range of the input image between the minimum gray-scale level and the maximum gray scale level to gray-scale levels corresponding to the minimum luminance and the maximum luminance in accordance with a gray-scale level/luminance characteristic of the light modulation device depending on the found light source luminance and output signals of level-range expanded input image to the light modulation device.

2. The apparatus according to claim 1, wherein the light source luminance setter

has a function converting a given gray-scale level to a luminance in a range of the minimum display luminance and the maximum display luminance displayable by the image display device, which depends on

the minimum modulation luminance and the maximum modulation luminance in the predetermined luminance modulation range of the light source and

the minimum transmittance and the maximum transmittance or the minimum reflectance and the maximum reflectance of the light modulation device, and

calculates the minimum luminance and the maximum luminance by giving the minimum gray-scale level and the maximum gray-scale level to the function.

3. The apparatus according to claim 2, wherein the function includes a term of a reverse gamma correction.

4. The apparatus according to claim 1, further comprising:

a memory to store a table associating the gray-scale level with the luminance, and wherein:

the light source luminance setter calculates the minimum luminance and the maximum luminance by referring to the table based on the minimum gray-scale level and the maximum gray-scale level.

5. The apparatus according to claim 1, wherein the light source luminance setter acquires the maximum light source luminance from the minimum luminance and the minimum light source luminance from the maximum luminance based on a relation between light source luminance and a gamma characteristic of the light modulation device.

6. The apparatus according to claim 1, wherein the light source luminance setter gets the minimum light source luminance as the light source luminance to be set to the light source in the case where the maximum light source luminance is equal to or higher than the minimum light source luminance.

7. The apparatus according to claim 1, wherein the light source luminance setter finds the light source luminance to be set to the light source between the maximum light source luminance and the minimum light source luminance in the case where the maximum light source luminance is lower than the minimum light source luminance.

8. The apparatus according to claim 7, wherein the light source luminance setter finds the light source luminance to be set to the light source by further using an average gray-scale level of the input image.

9. The apparatus according to claim 1, further comprising:

a memory to store a table associating minimum gray-scale levels and maximum gray-scale levels with light source luminance, and wherein:

the light source luminance setter finds the light source luminance to be set to the light source by referring to the table based on the minimum gray-scale level and the maximum gray-scale level of the input image.

10. The apparatus according to claim 1, further comprising:

a memory to store a first table associating minimum gray-scale levels and maximum gray-scale levels with gains and a second table associating minimum gray-scale levels and maximum gray-scale levels with offsets, and wherein:

the histogram expanding portion obtains a gain and an offset by referring to the first and second tables based on the minimum gray-scale level and the maximum gray-scale level of the input image, and expand the level-range of the input image by calculating $(G \times L) + O$ wherein L is the gray-scale level of each individual pixel included in the input image, G is the gain and O is the offset.

11. The apparatus according to claim 1, wherein the gray-scale level/luminance characteristic of the light modulation device is a gamma characteristic of the light modulation device.

12. The apparatus according to claim 1, wherein:

the light source controls light emission of multiple luminescent colors independently;
the light source luminance setter calculates the maximum light source luminance and the minimum light source luminance of each luminescent color from the minimum luminance and the maximum luminance of individual image corresponding to each luminescent color of the input image and find the light source luminance of each luminescent color; and
the histogram expanding portion expand a level-range of individual image corresponding to each luminescent color of the input image.

13. The apparatus according to claim 12, wherein the light source luminance setter corrects the light source luminance of which ratio to the maximum light source luminance is less than a predetermined value out of the light source luminance of the luminescent colors so that the ratio to the maximum light source luminance becomes equal to or more than the predetermined value.

14. The apparatus according to claim 12, wherein the multiple luminescent colors of the light source are three primary colors of red, green and blue.

15. The apparatus according to claim 1, further comprising:

a low-pass filter configured to suppress high-frequency components of the input image, and wherein:

the level-range detector detects the minimum gray-scale level and the maximum gray-scale level from the input image of which high-frequency components are suppressed by the low-pass filter; and
when expanding a level-range of the input image between gray-scale levels corresponding to the minimum luminance and the maximum luminance in accordance with the gray-scale level/luminance characteristic, the histogram expanding portion corrects a gray-scale level of the level-range expanded input image which is below a minimum display gray-scale level or exceeding a maximum display gray-scale level displayable on the light modulation device, to the minimum display gray-scale level or the maximum display gray-scale level.

16. The apparatus according to claim 1, wherein:

the level-range detector detects pixels of a predetermined percentage of entire number of pixels in lowering order of gray-scale level in the input image, corrects each gray-scale level of detected pixels to a lowest gray-scale level of the detected pixels, detects pixels of the predetermined percentage of the entire number of pixels in heightening order of gray-scale level, and corrects each gray-scale level of detected pixels to a highest gray-scale level of the detected pixels; and
when expanding a level-range of the input image between gray-scale levels corresponding to the minimum luminance and the maximum luminance in accordance with the gray-scale level/luminance characteristic, the histogram expanding portion corrects a gray-scale level of the level-range expanded input image which is below a minimum display gray-scale level or exceeding a maximum display gray-scale level displayable on the light modulation device, to the minimum display gray-scale level or the maximum display gray-scale level.

17. The apparatus according to claim 1, wherein:

the image display is a projection liquid crystal display or a transmissive liquid crystal display, which includes a liquid crystal panel as the light modulation device and the light source for radiating light to a front face or from a backside of the liquid crystal panel.

**18.** The apparatus according to claim 17, wherein:

the light source includes light-emitting diodes.

**19.** The apparatus according to claim 18, wherein:

the light source includes the light-emitting diodes of three primary colors of red, green and blue.

**20.** The apparatus according to claim 1, wherein:

the image display is a projection display including a digital micro mirror device as the light modulation device and the light source for radiating light to a front face of the digital micro mirror device.

**21.** The apparatus according to claim 20, wherein:

the light source includes light-emitting diodes.

**22.** The apparatus according to claim 21, wherein:

the light source includes the light-emitting diodes of three primary colors of red, green and blue.

**23.** An image display method for performing in an image display device including a light source capable of adjusting a light source luminance and a light modulation device displaying an image by modulating a transmittance or a reflectance of light from the light source based on signals representing the image, wherein a minimum display luminance displayable on the image display depends on a minimum transmittance or a minimum reflectance of the light modulation device and a minimum modulation luminance in a predetermined luminance modulation range of the light source, a maximum display luminance displayable on the image display depends on a maximum transmittance or a maximum reflectance of the light modulation device and a maximum backlight luminance in the predetermined luminance modulation range of the light source;

detecting a minimum gray-scale level and a maximum gray-scale level of an input image;
displaying a minimum luminance to be displayed with the minimum gray-scale level on the light modulation device and a minimum light source luminance capable of displaying a maximum luminance to be displayed with the maximum gray-scale level on the light acquiring a minimum luminance to be displayed based on the minimum gray-scale level of the input image, the minimum display luminance displayable on the image display and the maximum display luminance displayable on the image display; acquiring a maximum luminance to be displayed based on the maximum gray-scale level of the input image, the minimum display luminance displayable on the image display and the maximum display luminance displayable on the image display; acquiring a maximum light source luminance capable of displaying the minimum luminance to be displayed; acquiring a minimum light source luminance capable of displaying the maximum luminance to be displayed;
finding a light source luminance to be set to the light source based on the maximum light source luminance and the minimum light source luminance,
setting found light source luminance to the light source; and
expanding a level-range of the input image between gray-scale levels corresponding to the minimum luminance and the maximum luminance in accordance with a gray-scale level/luminance characteristic of the light modulation device depending on the found light source luminance and giving signals of level-range expanded input image to the light modulation device.

## Patentansprüche

**1.** Bildanzeigevorrichtung umfassend:

eine Bildanzeige mit einer Lichtquelle, die geeignet ist, eine Lichtquellen-Leuchtdichte anzupassen, und einer Lichtmodulations-Einrichtung, die ein Bild anzeigt, indem sie ein Transmissionsvermögen oder ein Reflexionsvermögen für Licht von der Lichtquelle auf der Grundlage von Signalen moduliert, die das Bild darstellen, wobei eine auf der Bildanzeige anzeigbare minimale Anzeigen-Leuchtdichte von einem minimalen Transmissionsvermögen oder einem minimalen Reflexionsvermögen der Lichtmodulations-Einrichtung und einer minimalen Modulations-Leuchtdichte in einem vorgegebenen Leuchtdichten-Modulationsbereich der Lichtquelle abhängt und eine auf der Bildanzeige anzeigbare maximale Anzeigen-Leuchtdichte von einem maximalen Transmissionsvermögen oder einem maximalen Reflexionsvermögen der Lichtmodulations-Einrichtung und einer maximalen Hintergrundbeleuchtungs-Leuchtdichte in dem vorgegebenen Leuchtdichten-Modulationsbereich der Lichtquelle abhängt;

einen Pegelbereichdetektor, der konfiguriert ist, einen minimalen Graustufenpegel und einen maximalen Graustufenpegel eines Eingabebilds zu erfassen;

eine Lichtquellen-Leuchtdichten-Einstelleinrichtung, die konfiguriert ist, eine minimale anzuzeigende Leuchtdichte auf der Grundlage des minimalen Graustufenpegels des Eingabebilds, der auf der Bildanzeige anzeigbaren minimalen Anzeigen-Leuchtdichte und der auf der Bildanzeige anzeigbaren maximalen Anzeigen-Leuchtdichte zu erfassen; eine maximale anzuzeigende Leuchtdichte auf der Grundlage des maximalen Graustufenpegels des Eingabebilds, der auf der Bildanzeige anzeigbaren minimalen Anzeigen-Leuchtdichte und der auf der Bildanzeige anzeigbaren maximalen Anzeigen-Leuchtdichte zu erfassen; eine maximale Lichtquellen-Leuchtdichte zu erfassen, die geeignet ist, die minimale anzuzeigende Leuchtdichte anzuzeigen; eine minimale Lichtquellen-Leuchtdichte zu erfassen, die geeignet ist, die maximale anzuzeigende Leuchtdichte anzuzeigen; eine an der Lichtquelle einzustellende Lichtquellen-Leuchtdichte auf der Grundlage der maximalen Lichtquellen-Leuchtdichte und der minimalen Lichtquellen-Leuchtdichte zu finden, und die gefundene Lichtquellen-Leuchtdichte an der Lichtquelle einzustellen; und

einen Histogrammerweiterungs-Abschnitt, der konfiguriert ist, einen Pegelbereich des Eingabebilds zwischen dem minimalen Graustufenpegel und dem maximalen Graustufenpegel auf Graustufenpegel zu erweitern, die der minimalen Leuchtdichte und der maximalen Leuchtdichte gemäß einer Graustufenpegel/Leuchtdichte-Charakteristik der Lichtmodulations-Einrichtung entsprechen, die von der gefundenen Lichtquellen-Leuchtdichte abhängt, und Signale des im Pegelbereich erweiterten Eingabebilds an die Lichtmodulations-Einrichtung auszugeben.

2. Vorrichtung nach Anspruch 1, bei der die Lichtquellen-Leuchtdichten-Einstelleinrichtung
eine Funktion aufweist, die einen gegebenen Graustufenpegel in eine Leuchtdichte in einem Bereich der durch die Bildanzeigeeinrichtung anzeigbaren minimalen und maximalen Anzeigen-Leuchtdichte umwandelt und von
der minimalen Modulations-Leuchtdichte und der maximalen Modulations-Leuchtdichte in dem vorgegebenen Leuchtdichten-Modulationsbereich der Lichtquelle und
dem minimalen Transmissionsvermögen und dem maximalen Transmissionsvermögen oder dem minimalen Reflexionsvermögen und dem maximalen Reflexionsvermögen der Lichtmodulations-Einrichtung abhängt, und die minimale Leuchtdichte und die maximale Leuchtdichte berechnet, indem sie den minimalen Graustufenpegel und den maximalen Graustufenpegel in die Funktion eingibt.

3. Vorrichtung nach Anspruch 2, bei der die Funktion einen Term einer umgekehrten Gammakorrektur beinhaltet.

4. Vorrichtung nach Anspruch 1 ferner umfassend:

einen Speicher zum Speichern einer Tabelle, die den Graustufenpegel mit der Leuchtdichte verbindet, und bei der:

die Lichtquellen-Leuchtdichten-Einstelleinrichtung die minimale Leuchtdichte und die maximale Leuchtdichte berechnet, indem sie sich auf die Tabelle auf der Grundlage des minimalen Graustufenpegels und des maximalen Graustufenpegels bezieht.

5. Vorrichtung nach Anspruch 1, bei der die Lichtquellen-Leuchtdichten-Einstelleinrichtung die maximale Lichtquellen-Leuchtdichte von der minimalen Leuchtdichte und die minimale Lichtquellen-Leuchtdichte von der maximalen Leuchtdichte auf der Grundlage einer Beziehung zwischen Lichtquellen-Leuchtdichte und einer Gamma-Charakteristik der Lichtmodulations-Einrichtung erfasst.

6. Vorrichtung nach Anspruch 1, bei der die Lichtquellen-Leuchtdichten-Einstelleinrichtung die minimale Lichtquellen-Leuchtdichte als die an der Lichtquelle einzustellende Lichtquellen-Leuchtdichte erhält, falls die maximale Lichtquellen-Leuchtdichte gleich groß wie oder größer als die minimale Lichtquellen-Leuchtdichte ist.

7. Vorrichtung nach Anspruch 1, bei der die Lichtquellen-Leuchtdichten-Einstelleinrichtung die an der Lichtquelle einzustellende Lichtquellen-Leuchtdichte zwischen der maximalen Lichtquellen-Leuchtdichte und der minimalen Lichtquellen-Leuchtdichte findet, falls die maximale Lichtquellen-Leuchtdichte kleiner als die minimale Lichtquellen-Leuchtdichte ist.

8. Vorrichtung nach Anspruch 7, bei der die Lichtquellen-Leuchtdichten-Einstelleinrichtung die an der Lichtquelle einzustellende Lichtquellen-Leuchtdichte durch weiteres Verwenden eines durchschnittlichen Graustufenpegels des Eingabebilds findet.

9. Vorrichtung nach Anspruch 1, ferner umfassend:

   einen Speicher zum Speichern einer Tabelle, die minimale Graustufenpegel und maximale Graustufenpegel mit der Lichtquellen-Leuchtdichte verbindet, und bei der:

   die Lichtquellen-Leuchtdichten-Einstelleinrichtung die an der Lichtquelle einzustellende Lichtquellen-Leuchtdichte findet, indem sie sich auf die Tabelle auf der Grundlage des minimalen Graustufenpegels und des maximalen Graustufenpegels des Eingabebilds bezieht.

10. Vorrichtung nach Anspruch 1, ferner umfassend:

   einen Speicher zum Speichern einer ersten Tabelle, die minimale Graustufenpegel und maximale Graustufenpegel mit Verstärkungen verbindet, und einer zweiten Tabelle, die minimale Graustufenpegel und maximale Graustufenpegel mit Offsets verbindet, und bei der:
   der Histogrammerweiterungs-Abschnitt eine Verstärkung und einen Offset erhält, indem er sich auf die erste und die zweite Tabelle auf der Grundlage des minimalen Graustufenpegels und des maximalen Graustufenpegels des Eingabebilds bezieht, und den Pegelbereich des Eingabebilds durch Berechnen von $(G \times L) + O$ erweitert, wobei L der Graustufenpegel jedes einzelnen in dem Eingabebild beinhalteten Pixels, G die Verstärkung und O der Offset ist.

11. Vorrichtung nach Anspruch 1, bei der die Graustufenpegel/Leuchtdichten-Charakteristik der Lichtmodulations-Einrichtung eine Gammacharakteristik der Lichtmodulations-Einrichtung ist.

12. Vorrichtung nach Anspruch 1, bei der:

   die Lichtquelle die Lichtemission mit mehreren Leuchtfarben unabhängig steuert;
   die Lichtquellen-Leuchtdichten-Einstelleinrichtung die maximale Lichtquellen-Leuchtdichte und die minimale Lichtquellen-Leuchtdichte jeder Leuchtfarbe von der minimalen Leuchtdichte und der maximalen Leuchtdichte des Einzelbilds, das jeder Leuchtfarbe des Eingabebilds entspricht, berechnet und die Lichtquellen-Leuchtdichte jeder Leuchtfarbe findet; und
   der Histogrammerweiterungs-Abschnitt einen Pegelbereich des Einzelbilds, das jeder Leuchtfarbe des Eingabebilds entspricht, erweitert.

13. Vorrichtung nach Anspruch 12, bei der die Lichtquellen-Leuchtdichten-Einstelleinrichtung die Lichtquellen-Leuchtdichte von der Lichtquellen-Leuchtdichte der Leuchtfarben, deren Verhältnis zu der maximalen Lichtquellen-Leuchtdichte kleiner als ein vorgegebener Wert ist, korrigiert, so dass das Verhältnis zu der maximalen Lichtquellen-Leuchtdichte gleich groß wie oder größer als der vorgegebene Wert wird.

14. Vorrichtung nach Anspruch 12, bei der die mehreren Leuchtfarben der Lichtquelle die drei Grundfarben rot, grün und blau sind.

15. Vorrichtung nach Anspruch 1, ferner umfassend:

   einen Tiefpassfilter, der konfiguriert ist, Hochfrequenzkomponenten des Eingabebilds zu unterdrücken, und bei der:

   der Pegelbereichdetektor den minimalen Graustufenpegel und den maximalen Graustufenpegel von dem Eingabebild erfasst, dessen Hochfrequenzkomponenten durch den Tiefpassfilter unterdrückt sind; und, wenn ein Pegelbereich des Eingabebilds zwischen Graustufen, die der minimalen Leuchtdichte und der maximalen Leuchtdichte gemäß der Graustufenpegel/Leuchtdichte-Charakteristik entsprechen, erweitert wird, der Histogrammerweiterungs-Abschnitt einen Graustufenpegel des im Pegelbereich erweiterten Eingabebilds, der unterhalb eines minimalen Anzeigen-Graustufenpegels liegt oder einen maximalen Anzeigen-Graustufenpegel übersteigt, die auf der Lichtmodulations-Einrichtung anzeigbar sind, auf den minimalen Anzeigen-Graustufenpegel oder den maximalen Anzeigen-Graustufenpegel korrigiert.

**16.** Vorrichtung nach Anspruch 1, bei der:

der Pegelbereichdetektor Pixel eines vorgegebenen Prozentsatzes der Gesamtanzahl von Pixeln in der Reihenfolge abnehmenden Graustufenpegels in dem Eingabebild erfasst, jeden Graustufenpegel der erfassten Pixel auf einen kleinsten Graustufenpegel der erfassten Pixel korrigiert, Pixel des vorgegebenen Prozentsatzes der Gesamtanzahl von Pixeln in der Reihenfolge ansteigenden Graustufenpegels erfasst und jeden Graustufenpegel erfasster Pixel auf einen größten Graustufenpegel der erfassten Pixel korrigiert; und, wenn ein Pegelbereich des Eingabebilds zwischen Graustufen, die der minimalen Leuchtdichte und der maximalen Leuchtdichte gemäß der Graustufenpegel/Leuchtdichte-Charakteristik entsprechen, erweitert wird, der Histogrammerweiterungs-Abschnitt einen Graustufenpegel des im Pegelbereich erweiterten Eingabebilds, der unterhalb eines minimalen Anzeigen-Graustufenpegels liegt oder einen maximalen Anzeigen-Graustufenpegel übersteigt, die auf der Lichtmodulations-Einrichtung anzeigbar sind, auf den minimalen Anzeigen-Graustufenpegel oder den maximalen Anzeigen-Graustufenpegel korrigiert.

**17.** Vorrichtung nach Anspruch 1, bei der:

die Bildanzeige eine Projektions-Flüssigkristallanzeige oder eine Transmissions-Flüssigkristallanzeige ist, die ein Flüssigkristallpanel als die Lichtmodulations-Einrichtung und die Lichtquelle zum Abstrahlen von Licht zu einer Vorderfläche oder von einer Rückseite des Flüssigkristallpanels beinhaltet.

**18.** Vorrichtung nach Anspruch 17, bei der:

die Lichtquelle lichtemittierende Dioden beinhaltet.

**19.** Vorrichtung nach Anspruch 18, bei der:

die Lichtquelle die lichtemittierenden Dioden der drei Grundfarben rot, grün und blau beinhaltet.

**20.** Vorrichtung nach Anspruch 1, bei der:

die Bildanzeige eine Projektionsanzeige ist, die eine Digitalmikrospiegel-Einrichtung als die Lichtmodulations-Einrichtung und die Lichtquelle zum Abstrahlen von Licht zu einer Vorderfläche der Digitalmikrospiegel-Einrichtung beinhaltet.

**21.** Vorrichtung nach Anspruch 20, bei der:

die Lichtquelle lichtemittierende Dioden beinhaltet.

**22.** Vorrichtung nach Anspruch 21, bei der:

die Lichtquelle die lichtemittierenden Dioden der drei Grundfarben rot, grün und blau beinhaltet.

**23.** Bildanzeigeverfahren zum Durchführen in einer Bildanzeigeeinrichtung mit einer Lichtquelle, die geeignet ist, eine Lichtquellen-Leuchtdichte anzupassen, und einer Lichtmodulations-Einrichtung, die ein Bild anzeigt, indem sie ein Transmissionsvermögen oder ein Reflexionsvermögen für Licht von der Lichtquelle auf der Grundlage von Signalen moduliert, die das Bild darstellen, wobei eine auf der Bildanzeige anzeigbare minimale Anzeigen-Leuchtdichte von einem minimalen Transmissionsvermögen oder einem minimalen Reflexionsvermögen der Lichtmodulations-Einrichtung und einer minimalen Modulations-Leuchtdichte in einem vorgegebenen Leuchtdichten-Modulationsbereich der Lichtquelle abhängt und eine auf der Bildanzeige anzeigbare maximale Anzeigen-Leuchtdichte von einem maximalen Transmissionsvermögen oder einem maximalen Reflexionsvermögen der Lichtmodulations-Einrichtung und einer maximalen Hintergrundbeleuchtungs-Leuchtdichte in dem vorgegebenen Leuchtdichten-Modulationsbereich der Lichtquelle abhängt; Erfassen eines minimalen Graustufenpegels und eines maximalen Graustufenpegels eines Eingabebilds; Erfassen einer minimalen anzuzeigenden Leuchtdichte auf der Grundlage des minimalen Graustufenpegels des Eingabebilds, der auf der Bildanzeige anzeigbaren minimalen Anzeigen-Leuchtdichte und der auf der Bildanzeige anzeigbaren maximalen Anzeigen-Leuchtdichte; Erfassen einer maximalen anzuzeigenden Leuchtdichte auf der Grundlage des maximalen Graustufenpegels des Eingabebilds, der auf der Bildanzeige anzeigbaren minimalen Anzeigen-Leuchtdichte und der auf der Bildanzeige anzeigbaren maximalen Anzeigen-Leuchtdichte; Erfassen einer maximalen Lichtquellen-Leuchtdichte, die geeignet ist, die minimale anzuzeigende Leuchtdichte anzuzeigen; Erfassen einer minimalen Lichtquellen-Leuchtdichte, die geeignet ist, die maximale anzuzeigende Leuchtdichte anzuzeigen;

Finden einer an der Lichtquelle einzustellenden Lichtquellen-Leuchtdichte auf der Grundlage der maximalen Lichtquellen-Leuchtdichte und der minimalen Lichtquellen-Leuchtdichte,

Einstellen der gefundenen Lichtquellen-Leuchtdichte an der Lichtquelle; und

Erweitern eines Pegelbereichs des Eingabebilds zwischen Graustufenpegeln, die der minimalen Leuchtdichte und der maximalen Leuchtdichte gemäß einer Graustufenpegel/Leuchtdichte-Charakteristik der Lichtmodulations-Einrichtung entsprechen, die von der gefundenen Lichtquellen-Leuchtdichte abhängt, und Weitergeben von Signalen des im Pegelbereich erweiterten Eingabebilds an die Lichtmodulations-Einrichtung.

## Revendications

1. Dispositif d'affichage d'image comprenant :

   un afficheur d'image comprenant une source de lumière capable d'ajuster une luminance de source de lumière et un dispositif de modulation de lumière affichant une image en modulant une transmittance ou une réflectance de lumière de la source de lumière sur la base de signaux représentant l'image, dans lequel une luminance d'affichage minimum affichable sur l'afficheur d'image dépend d'une transmittance minimum ou d'une réflectance minimum du dispositif de modulation de lumière et d'une luminance de modulation minimum dans une plage de modulation de luminance prédéterminée de la source de lumière, une luminance d'affichage maximum affichable sur l'afficheur d'image dépend d'une transmittance maximum ou d'une réflectance maximum du dispositif de modulation de lumière et d'une luminance de rétroéclairage maximum dans la plage de modulation de luminance prédéterminée de la source de lumière ;
   un détecteur de plage de niveaux configuré pour détecter un niveau d'échelle de gris minimum et un niveau d'échelle de gris maximum d'une image d'entrée ;
   un dispositif de détermination de luminance de source de lumière configuré pour
   acquérir une luminance minimum à afficher sur la base du niveau d'échelle de gris minimum de l'image d'entrée, de la luminance d'affichage minimum affichable sur l'afficheur d'image et de la luminance d'affichage maximum affichable sur l'afficheur d'image ;
   acquérir une luminance maximum à afficher sur la base du niveau d'échelle de gris maximum de l'image d'entrée, de la luminance d'affichage minimum affichable sur l'afficheur d'image et de la luminance d'affichage maximum affichable sur l'afficheur d'image ;
   acquérir une luminance de source de lumière maximum capable d'afficher la luminance minimum à afficher ;
   acquérir une luminance de source de lumière minimum capable d'afficher la luminance maximum à afficher ;
   trouver une luminance de source de lumière à appliquer à la source de lumière sur la base de la luminance de source de lumière maximum et de la luminance de source de lumière minimum, et
   appliquer la luminance de source de lumière trouvée à la source de lumière ;
   et
   une partie d'extension d'histogramme configurée pour étendre une plage de niveaux de l'image d'entrée entre le niveau d'échelle de gris minimum et le niveau d'échelle de gris maximum à des niveaux d'échelle de gris correspondant à la luminance minimum et à la luminance maximum selon une caractéristique niveau d'échelle de gris / luminance du dispositif de modulation de lumière dépendant de la luminance de source de lumière trouvée et délivrer des signaux d'image d'entrée à plage de niveaux étendue au dispositif de modulation de lumière.

2. Dispositif selon la revendication 1, dans lequel le dispositif de détermination de luminance de source de lumière a pour fonction de convertir un niveau d'échelle de gris donné en une luminance dans une plage de la luminance d'affichage minimum à la luminance d'affichage maximum affichable par le dispositif d'affichage d'image, qui dépend de la luminance de modulation minimum et de la luminance de modulation maximum dans la plage de modulation de luminance prédéterminée de la source de lumière et
   de la transmittance minimum et de la transmittance maximum ou de la réflectance minimum et de la réflectance maximum du dispositif de modulation de lumière, et

calcule la luminance minimum et la luminance maximum en donnant le niveau d'échelle de gris minimum et le niveau d'échelle de gris maximum à la fonction.

3. Dispositif selon la revendication 2, dans lequel la fonction comprend un terme d'une correction de gamma inverse.

4. Dispositif selon la revendication 1, comprenant en outre :

   une mémoire pour mémoriser une table associant le niveau d'échelle de gris à la luminance, et dans lequel :

      le dispositif de détermination de luminance de source de lumière calcule la luminance minimum et la luminance maximum en se référant à la table sur la base du niveau d'échelle de gris minimum et du niveau d'échelle de gris maximum.

5. Dispositif selon la revendication 1, dans lequel le dispositif de détermination de luminance de source de lumière acquière la luminance de source de lumière maximum à partir de la luminance minimum et la luminance de source de lumière minimum à partir de la luminance maximum sur la base d'une relation entre la luminance de source de lumière et une caractéristique de gamma du dispositif de modulation de lumière.

6. Dispositif selon la revendication 1, dans lequel le dispositif de détermination de luminance de source de lumière obtient la luminance de source de lumière minimum en tant que luminance de source de lumière à appliquer à la source de lumière dans le cas où la luminance de source de lumière maximum est égale ou supérieure à la luminance de source de lumière minimum.

7. Dispositif selon la revendication 1, dans lequel le dispositif de détermination de luminance de source de lumière trouve la luminance de source de lumière à appliquer à la source de lumière entre la luminance de source de lumière maximum et la luminance de source de lumière minimum dans le cas où la luminance de source de lumière maximum est inférieure à la luminance de source de lumière minimum.

8. Dispositif selon la revendication 7, dans lequel le dispositif de détermination de luminance de source de lumière trouve la luminance de source de lumière à appliquer à la source de lumière en utilisant en outre un niveau d'échelle de gris moyen de l'image d'entrée.

9. Dispositif selon la revendication 1, comprenant en outre :

   une mémoire pour mémoriser une table associant des niveaux d'échelle de gris minimums et des niveaux d'échelle de gris maximums à une luminance de source de lumière, et dans lequel :

      le dispositif de détermination de luminance de source de lumière trouve la luminance de source de lumière à appliquer à la source de lumière en se référant à la table sur la base du niveau d'échelle de gris minimum et du niveau d'échelle de gris maximum de l'image d'entrée.

10. Dispositif selon la revendication 1, comprenant en outre :

    une mémoire pour mémoriser une première table associant des niveaux d'échelle de gris minimums et des niveaux d'échelle de gris maximums à des gains et une deuxième table associant des niveaux d'échelle de gris minimums et des niveaux d'échelle de gris maximums à des décalages, et dans lequel :
    la partie d'extension d'histogramme obtient un gain et un décalage en se référant aux première et deuxième tables sur la base du niveau d'échelle de gris minimum et du niveau d'échelle de gris maximum de l'image d'entrée, et étend la plage de niveaux de l'image d'entrée en calculant $(G \times L) + O$, où L est le niveau d'échelle de gris de chaque pixel individuel inclus dans l'image d'entrée, G est le gain et O est le décalage.

11. Dispositif selon la revendication 1, dans lequel la caractéristique niveau d'échelle de gris / luminance du dispositif de modulation de lumière est une caractéristique de gamma du dispositif de modulation de lumière.

12. Dispositif selon la revendication 1, dans lequel :

    la source de lumière commande une émission de lumière de multiples couleurs luminescentes de manière indépendante ;

le dispositif de détermination de luminance de source de lumière calcule la luminance de source de lumière maximum et la luminance de source de lumière minimum de chaque couleur luminescente à partir de la luminance minimum et de la luminance maximum de l'image individuelle correspondant à chaque couleur luminescente de l'image d'entrée et trouve la luminance de source de lumière de chaque couleur luminescente ; et la partie d'extension d'histogramme étend une plage de niveaux de l'image individuelle correspondant à chaque couleur luminescente de l'image d'entrée.

**13.** Dispositif selon la revendication 12, dans lequel le dispositif de détermination de luminance de source de lumière corrige la luminance de source de lumière dont le rapport avec la luminance de source de lumière maximum est inférieur à une valeur prédéterminée parmi les luminances de source de lumière des couleurs luminescentes de sorte que le rapport avec la luminance de source de lumière maximum devienne égal ou supérieur à la valeur prédéterminée.

**14.** Dispositif selon la revendication 12, dans lequel les multiples couleurs luminescentes de la source de lumière sont les trois couleurs primaires rouge, vert et bleu.

**15.** Dispositif selon la revendication 1, comprenant en outre :

un filtre passe-bas configuré pour supprimer les composantes haute fréquence de l'image d'entrée, et dans lequel :

le détecteur de plage de niveaux détecte le niveau d'échelle de gris minimum et le niveau d'échelle de gris maximum à partir de l'image d'entrée dont les composantes haute fréquence ont été supprimées par le filtre passe-bas ; et
lors de l'extension d'une plage de niveaux de l'image d'entrée entre des niveaux d'échelle de gris correspondant à la luminance minimum et à la luminance maximum selon la caractéristique niveau d'échelle de gris / luminance, la partie d'extension d'histogramme corrige un niveau d'échelle de gris de l'image d'entrée à plage de niveaux étendue, qui est au-dessous d'un niveau d'échelle de gris d'affichage minimum ou qui dépasse un niveau d'échelle de gris d'affichage maximum affichable sur le dispositif de modulation de lumière, en l'amenant à un niveau d'échelle de gris d'affichage minimum ou à un niveau d'échelle de gris d'affichage maximum.

**16.** Dispositif selon la revendication 1, dans lequel :

le détecteur de plage de niveaux détecte des pixels d'un pourcentage prédéterminé d'un nombre entier de pixels dans un ordre décroissant de niveau d'échelle de gris dans l'image d'entrée, corrige chaque niveau d'échelle de gris des pixels détectés en un niveau d'échelle de gris le plus faible des pixels détectés, détecte des pixels du pourcentage prédéterminé du nombre entier de pixels dans un ordre croissant de niveau d'échelle de gris, et corrige chaque niveau d'échelle de gris des pixels détectés en un niveau d'échelle de gris le plus élevé des pixels détectés ; et
lors de l'extension d'une plage de niveaux de l'image d'entrée entre des niveaux d'échelle de gris correspondant à la luminance minimum et à la luminance maximum selon la caractéristique niveau d'échelle de gris / luminance, la partie d'extension d'histogramme corrige un niveau d'échelle de gris de l'image d'entrée à plage de niveaux étendue qui est au-dessous d'un niveau d'échelle de gris d'affichage minimum ou qui dépasse un niveau d'échelle de gris d'affichage maximum affichable sur le dispositif de modulation de lumière en l'amenant à un niveau d'échelle de gris d'affichage minimum ou en l'amenant à un niveau d'échelle de gris d'affichage maximum.

**17.** Dispositif selon la revendication 1, dans lequel :

l'afficheur d'image est un afficheur à cristaux liquides à projection ou un afficheur à cristaux liquides à transmission, qui comprend un panneau à cristaux liquides en tant que dispositif de modulation de lumière et la source de lumière pour rayonner une lumière vers une surface avant ou à partir d'un côté arrière du panneau à cristaux liquides.

**18.** Dispositif selon la revendication 17, dans lequel :

la source de lumière comprend des diodes électroluminescentes.

**19.** Dispositif selon la revendication 18, dans lequel :

la source de lumière comprend les diodes électroluminescentes des trois couleurs primaires rouge, vert et bleu.

**20.** Dispositif selon la revendication 1, dans lequel :

l'afficheur d'image est un afficheur à projection comprenant un dispositif à micro miroirs numériques en tant que dispositif de modulation de lumière et la source de lumière pour rayonner une lumière vers une surface avant du dispositif à micro miroirs numériques.

**21.** Dispositif selon la revendication 20, dans lequel :

la source de lumière comprend des diodes électroluminescentes.

**22.** Dispositif selon la revendication 21, dans lequel :

la source de lumière comprend les diodes électroluminescentes des trois couleurs primaires rouge, vert et bleu.

**23.** Procédé d'affichage d'image pour fonctionner dans un dispositif d'affichage d'image comprenant une source de lumière capable d'ajuster une luminance de source de lumière et un dispositif de modulation de lumière affichant une image en modulant une transmittance ou une réflectance d'une lumière provenant de la source de lumière sur la base de signaux représentant l'image, dans lequel une luminance d'affichage minimum affichable sur l'afficheur d'image dépend d'une transmittance minimum ou d'une réflectance minimum du dispositif de modulation de lumière et d'une luminance de modulation minimum dans une plage de modulation de luminance prédéterminée de la source de lumière, une luminance d'affichage maximum affichable sur l'afficheur d'image dépend d'une transmittance maximum ou d'une réflectance maximum du dispositif de modulation de lumière et d'une luminance de rétroéclairage maximum dans la plage de modulation de luminance prédéterminée de la source de lumière, les étapes consistant à :

détecter un niveau d'échelle de gris minimum et un niveau d'échelle de gris maximum d'une image d'entrée ;
afficher une luminance minimum à afficher avec le niveau d'échelle de gris minimum sur le dispositif de modulation de lumière et une luminance de source de lumière minimum capable d'afficher une luminance maximum à afficher avec le niveau d'échelle de gris maximum sur le dispositif de modulation de lumière,
acquérir une luminance minimum à afficher sur la base du niveau d'échelle de gris minimum de l'image d'entrée, de la luminance d'affichage minimum affichable sur l'afficheur d'image et de la luminance d'affichage maximum affichable sur l'afficheur d'image ;
acquérir une luminance maximum à afficher sur la base du niveau d'échelle de gris maximum de l'image d'entrée, de la luminance d'affichage minimum affichable sur l'afficheur d'image et de la luminance d'affichage maximum affichable sur l'afficheur d'image ;
acquérir une luminance de source de lumière maximum capable d'afficher la luminance minimum à afficher ;
acquérir une luminance de source de lumière minimum capable d'afficher la luminance maximum à afficher ;
trouver une luminance de source de lumière à appliquer à la source de lumière sur la base de la luminance de source de lumière maximum et de la luminance de source de lumière minimum,
appliquer la luminance de source de lumière trouvée à la source de lumière ; et
étendre une plage de niveaux de l'image d'entrée entre des niveaux d'échelle de gris correspondant à la luminance minimum et à la luminance maximum selon une caractéristique niveau d'échelle de gris / luminance du dispositif de modulation de lumière en fonction de la luminance de source de lumière trouvée et délivrer des signaux d'image d'entrée à plage de niveaux étendue au dispositif de modulation de lumière.

FIG. 1

INPUT IMAGE

HISTOGRAM EXPANDING PORTION — 13

LIQUID CRYSTAL PANEL — 21

LEVEL-RANGE DETECTOR — 11

LIGHT SOURCE LUMINANCE SETTER — 12

BACKLIGHT — 22

14 : IMAGE DISPLAY

EP 1 858 001 B1

```
                    ┌──────────┐
                    │  START   │
                    └────┬─────┘
                         │
                         ▼
┌──────────────────────────────────────────────────┐
│  LEVEL-RANGE DETECTOR DETECTS MINIMUM GRAY-SCALE   │ ─── S11
│  LEVEL AND MAXIMUM GRAY-SCALE LEVEL OF INPUT IMAGE │
└────────────────────────┬───────────────────────────┘
                         │
                         ▼
┌──────────────────────────────────────────────────┐
│  LIGHT SOURCE LUMINANCE SETTER ACQUIRES MINIMUM    │
│  LUMINANCE AND MAXIMUM LUMINANCE OF INPUT IMAGE    │ ─── S12
│  IN MAXIMUM DYNAMIC RANGE BASED ON MINIMUM         │
│  GRAY-SCALE LEVEL AND MAXIMUM GRAY-SCALE LEVEL OF  │
│  INPUT IMAGE                                        │
└────────────────────────┬───────────────────────────┘
                         │
                         ▼
┌──────────────────────────────────────────────────┐
│  LIGHT SOURCE LUMINANCE SETTER FINDS BACKLIGHT     │
│  EMISSION LUMINANCE FROM MINIMUM LUMINANCE AND     │
│  MAXIMUM LUMINANCE AND RELATION BETWEEN RELATIVE   │ ─── S13
│  LUMINANCE OF BACKLIGHT AND GAMMA CHARACTERISTIC   │
│  OF LIQUID CRYSTAL PANEL                            │
└────────────────────────┬───────────────────────────┘
                         │
                         ▼
┌──────────────────────────────────────────────────┐
│  HISTOGRAM EXPANDING PORTION EXPANDS LEVEL-RANGE   │ ─── S14
│  OF INPUT IMAGE BASED ON FOUND LIGHT SOURCE        │
│  LUMINANCE OF BACKLIGHT                             │
└────────────────────────┬───────────────────────────┘
                         │
                         ▼
┌──────────────────────────────────────────────────┐
│  IMAGE DISPLAY WRITES INPUT IMAGE EXPANDED BY      │
│  HISTOGRAM EXPANDING PORTION TO LIQUID CRYSTAL     │
│  PANEL AND LIGHTS UP BACKLIGHT AT LIGHT SOURCE     │ ─── S15
│  LUMINANCE SET BY LIGHT SOURCE LUMINANCE STTER SO  │
│  AS TO DISPLAY INPUT IMAGE                          │
└────────────────────────┬───────────────────────────┘
                         │
                         ▼
                    ┌──────────┐
                    │   END    │
                    └──────────┘
```

## FIG. 2

| L | Y |
|---|---|
| 0 | 0.000200 |
| 1 | 0.000205 |
| | |
| 254 | 0.991395 |
| 255 | 1.000000 |

FIG. 3

FIG. 4

EP 1 858 001 B1

FIG. 5

EP 1 858 001 B1

MAXIMUM GRAY-SCALE LEVEL

| | 0 | 1 | | 254 | 255 |
|---|---|---|---|---|---|
| 0 | 0.050 | 0.050 | | 0.803 | 0.810 |
| 1 | | 0.050 | | 0.804 | 0.811 |
| | | | | | |
| 254 | | | | 0.991 | 1.000 |
| 255 | | | | | 1.000 |

MINIMUM GRAY-SCALE LEVEL

FIG. 6

EP 1 858 001 B1

FIG. 7

INPUT IMAGE

HISTOGRAM
EXPANDING
PORTION
13

LIQUID CRYSTAL
PANEL
21

LEVEL-RANGE
DETECTOR
11

LIGHT SOURCE
LUMINANCE
SETTER
12

BACKLIGHT
22

LOOK UP
TABLE
15:ROM

14:IMAGE DISPLAY

EP 1 858 001 B1

FIG. 8

EP 1 858 001 B1

LOOK UP TABLE

16:ROM

13

INPUT IMAGE

HISTOGRAM EXPANDING PORTION

LIQUID CRYSTAL PANEL

21

LEVEL-RANGE DETECTOR

LIGHT SOURCE LUMINANCE SETTER

BACKLIGHT

22

11

12

14:IMAGE DISPLAY

FIG. 9

MAXIMUM GRAY-SCALE LEVEL

MINIMUM GRAY-SCALE LEVEL

| | 0 | 1 | | 254 | 255 |
|---|---|---|---|---|---|
| 0 | 0.000 | 4.000 | | 1.004 | 1.000 |
| 1 | | 4.000 | | 1.008 | 1.004 |
| | | | | | |
| 254 | | | | 1.004 | 1.000 |
| 255 | | | | | 1.000 |

FIG. 10

MAXIMUM GRAY-SCALE LEVEL

| | 0 | 1 | | 254 | 255 |
|---|---|---|---|---|---|
| 0 | 0.000 | 0.000 | | 0 | 0 |
| 1 | | 0.000 | | −1.008 | 1.004 |
| 254 | | | | 0.000 | 0.000 |
| 255 | | | | | 0.000 |

MINIMUM GRAY-SCALE LEVEL

FIG. 11

INPUT IMAGE

HISTOGRAM
EXPANDING
PORTION

13

LIQUID CRYSTAL
PANEL

21

23:LENS

LEVEL-RANGE
DETECTOR

11

LIGHT SOURCE
LUMINANCE
SETTER

12

31:HALOGEN LIGHT SOURCE

32:IMAGE DISPLAY

FIG.12

EP 1 858 001 B1

33

FIG. 13

EP 1 858 001 B1

FIG. 14

INPUT IMAGE

51 — LEVEL-RANGE DETECTOR

52 — LIGHT SOURCE LUMINANCE SETTER

53 — HISTOGRAM EXPANDING PORTION

59 : IMAGE DISPLAY

58 — LIQUID CRYSTAL PANEL

55 — LIGHT GUIDE PLATE

57 : BACKLIGHT

56a : RED LIGHT SOURCE
56b : GREEN LIGHT SOURCE
56c : BLUE LIGHT SOURCE

56

EP 1 858 001 B1

INPUT IMAGE

53

72a : RED LIGHT
        SOURCE

HISTOGRAM
EXPANDING
PORTION

DIGITAL
MICRO
MIRROR DEVICE

71

72b : GREEN LIGHT
         SOURCE

LEVEL-RANGE
DETECTOR

LIGHT SOURCE
LUMINANCE
SETTER

72c : BLUE LIGHT
         SOURCE

74 : LENS

51

52

73 : IMAGE DISPLAY

FIG. 15

INPUT IMAGE

HISTOGRAM
EXPANDING
PORTION
84

LIQUID CRYSTAL
PANEL
86

LOW-PASS
FILTER
81

LEVEL-RANGE
DETECTOR
82

LIGHT SOURCE
LUMINANCE
SETTER
83

BACKLIGHT
87

85 : IMAGE DISPLAY

FIG. 16

EP 1 858 001 B1

INPUT IMAGE

HISTOGRAM
EXPANDING
PORTION

84

LIQUID CRYSTAL
PANEL

86

LEVEL-RANGE
DETECTOR

LEVEL CORRECTING
PORTION

LIGHT SOURCE
LUMINANCE
SETTER

BACKLIGHT

87

88    89

83

85 : IMAGE DISPLAY

FIG. 17

EP 1 858 001 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3215388 B

- WO 2005093703 A

**Non-patent literature cited in the description**

- *SID Symposium Digest of Technical Papers,* vol. 36 (1), 1380-1383